# EUROPEAN PATENT SPECIFICATION

(11) **EP 0 711 777 B1**
(45) Date of publication and mention of the grant of the patent: **04.04.2001**
(21) Application number: 95308048.8
(22) Date of filing: 10.11.1995
(51) Int. Cl.: C07F 7/08, C09K 19/40

(54) **Cyclohexanone compounds, a process for preparing the cyclohexanone compounds, and a process for preparing silacyclohexane-based compounds from the cyclohexanone compounds**
Cyclohexanonverbindungen, Verfahren zu deren Herstellung und ein Verfahren zur Herstellung von Silacyclohexanderivaten aus diesen Verbindungen
Composés cyclohexanoniques, procédé pour les préparer, et un procédé pour la préparation de dérivés de silacyclohexane à partir de ces composés

(30) Priority: 10.11.1994 JP 30133094
(43) Date of publication of application: 15.05.1996
(73) Proprietor: Shin-Etsu Chemical Co., Ltd., Chiyoda-ku, Tokyo 100-0004 (JP)
(72) Inventor: Kinsho, Takeshi, c/o Gosei Gijutsu Kenkyusho, Kubiki-mura, Nakakubiki-gun, Niigata-ken (JP); Shimizu, Takaaki, c/o Gosei Gijutsu Kenkyusho, Kubiki-mura, Nakakubiki-gun, Niigata-ken (JP); Ogihara, Tsutomu, c/o Gosei Gijutsu Kenkyusho, Kubiki-mura, Nakakubiki-gun, Niigata-ken (JP); Kaneko, Tatsushi, c/o Gosei Gijutsu Kenkyusho, Kubiki-mura, Nakakubiki-gun, Niigata-ken (JP); Nakashima, Mutsuo, c/o Gosei Gijutsu Kenkyusho, Kubiki-mura, Nakakubiki-gun, Niigata-ken (JP)
(74) Representative: Woods, Geoffrey Corlett

(56) References cited:
- EP-A- 0 657 460
- EP-A- 0 668 286
- EP-A- 0 673 942

## Description

This invention relates to novel cyclohexanone compounds which are useful for preparing silacyclohexane-based liquid crystal compounds, and also to the preparation thereof. The invention also relates to a process for preparing silacyclohexane-based liquid crystal compounds from the cyclohexanone compounds.

The liquid crystal display devices utilize optical anisotropy and dielectric anisotropy of liquid crystal substances. Depending on the mode of display, different types of display systems are known including those of a twisted nematic type (TN type), a supertwisted nematic type (STN type), a super birefringence type (SBE type), a dynamic scattering type (DS type), a guest/host type, a type of deformation of aligned phase (DAP type), a polymer dispersion type (PD type), and an optical mode interference type (OMI type). The most popular display device is one which is based on the Schadt-Helfrich effect and has a twisted nematic structure.

Although the properties of the liquid crystal substances used in these liquid crystal devices depend, more or less, on the type of display, it is commonly required that the liquid crystal substances have a wide range of temperatures working as a liquid crystal and that they be stable against moisture, air, light, heat, electric field and the like. Further, the liquid crystal substances should desirably be low in viscosity and should ensure a short address time, a low threshold voltage and a high contrast in a cell.

As the liquid crystal display devices have wider utility in recent years, the characteristic properties required for liquid crystal materials become much severer. In addition, those characteristics which have never been required for conventional liquid crystal substances are now expected such as a lower drive voltage, a wider working temperature range which could satisfy the on-vehicle needs, and an improved low temperature performance.

Under these circumstances, novel liquid crystal compounds have been developed which contain a silicon atom in the molecule so that the characteristic properties for use as a liquid crystal substance are improved.

An object of the invention is to provide cyclohexanone compounds which are useful as intermediates for preparing silacyclohexane-based liquid crystal compounds. Another object of the invention is to provide a process for preparing the cyclohexanone compounds mentioned above. A further object of the invention is to provide a process for preparing silacyclohexane-based compounds from the cyclohexanone compounds.

Accordingly the present invention provides a cyclohexanone compound of the following general formula (I), 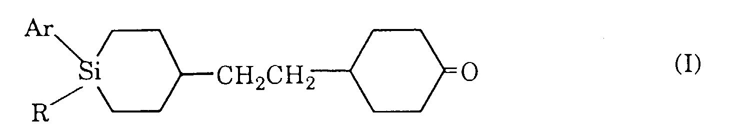 wherein Ar represents a phenyl group or a tolyl group, and R represents a phenyl group, a tolyl group, a linear C₁-C₁₀ alkyl group a mono- or difluoro-C₁-C₁₀ alkyl group, a branched C₃-C₈ alkyl group or a C₂-C₇ alkoxyalkyl group.

The cyclohexanone compound can be prepared by a process which comprises the steps of:
(a) subjecting, to a Michael addition reaction, methyl vinyl ketone and an enamine compound of the following general formula (1): 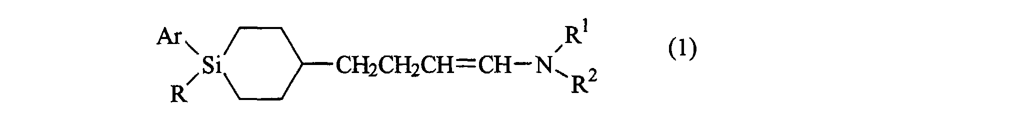 wherein each of Ar and R is as defined above and R¹ and R², which may be the same or different, each represents a C₁-C₄ alkyl group, or R¹ and R² together form -(CH₂)₄-, -(CH₂)₅- or -(CH₂)₂O(CH₂)₂- so as to complete a cyclic ring with the nitrogen atom to which they are linked;
(b) subjecting the resulting Michael adduct of the following formula (2) 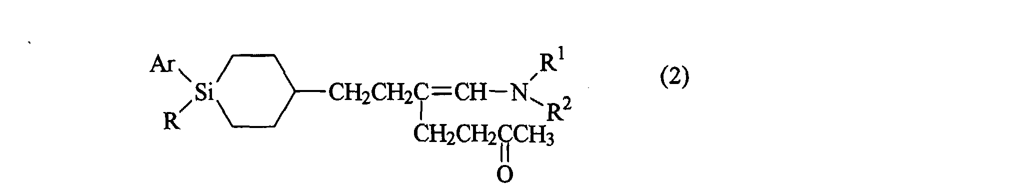 wherein Ar, R, R₁ and R₂ are as defined above, to an intramolecular aldol condensation or hydrolysis;
(c) subjecting the resulting ketoaldehyde of formula (3): 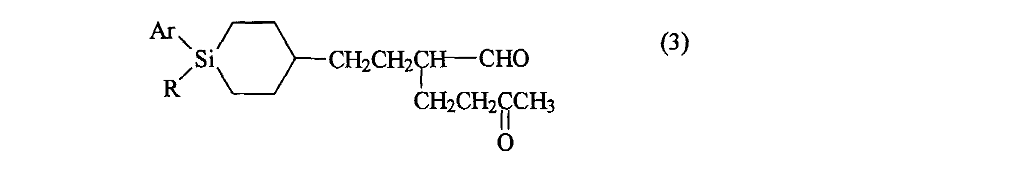 wherein Ar and R are as defined above, to an intramolecular aldol condensation; and
(d) hydrogenating the resulting cyclohexenone compound of formula (4): 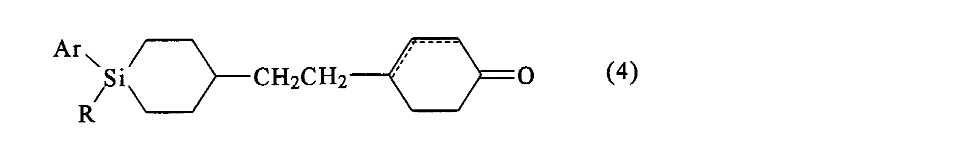 wherein 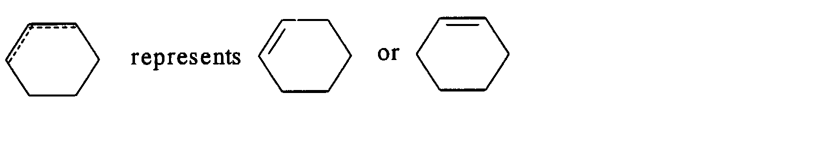 and Ar and R are as defined above.

The present invention further provides a process for preparing a silacyclohexane compound of the following general formula (II): 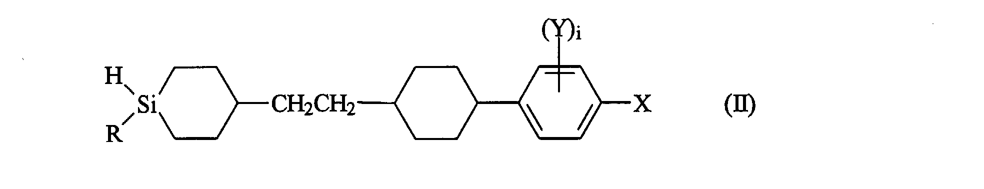 wherein R is as defined above with respect to the formula (I), X represents CN, F, Cl, Br, CF₃, OCF₃, OCHF₂, OCHFCl, OCF₂Cl, CF₂Cl, R or OR wherein R is as defined above, (O)ₘCY₁-CX₁X₂ wherein m is 0 or 1, Y₁ and X₁, which may be the same or different, are each H, F or Cl, and X₂ represents F or Cl, or O (CH₂) ᵣ (CF₂)ₛX₃ wherein r and s, which may be the same or different, are each 0, 1 or 2 provided that r + s = 2, 3 or 4, and X₃ is H, F or Cl, Y is a halogen or CH₃ and i is 0, 1 or 2, which process comprises:
(a) reacting a compound of the general formula (I) as defined above with an organometallic compound of the following formula (5) 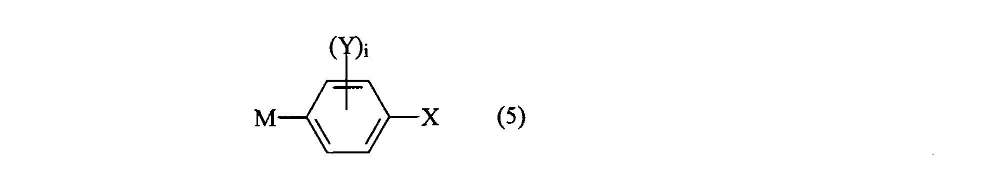 wherein M is Li, MgU, ZnU or TiUₖ(OW)₃₋ₖ wherein U is a halogen, W is an alkyl group and k is zero or an integer of 1 to 3, and X, Y and i are each as defined above for formula (II) ;
(b) subjecting the resulting compound of formula (6): 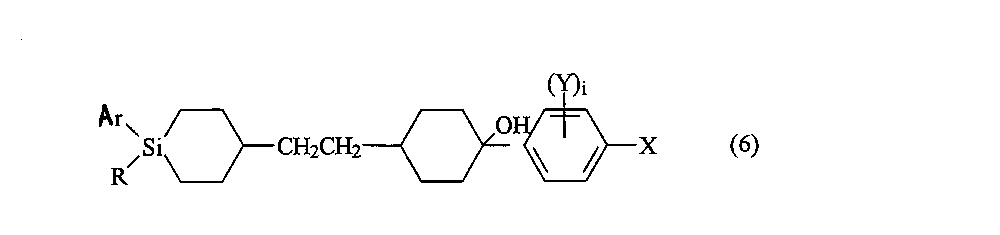 wherein Ar, R, X, Y and i are as defined above, to hydrogenolysis or dehydration and hydrogenation; and
(c) subjecting the resulting compound of formula (7): 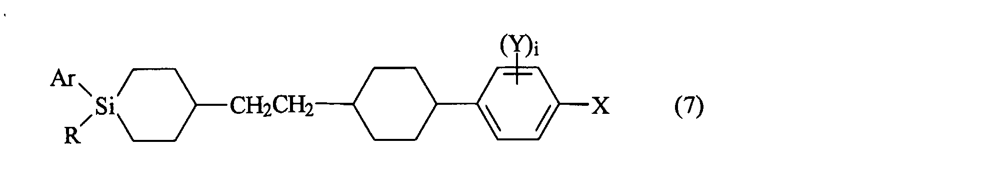 wherein Ar, R, X, Y and i are as defined above, to de-silylation and reduction.

When Y in the above formulae is a halogen it is preferably F or Cl. When U in formula (5) is halogen it is preferably Cl, Br or I. W is preferably alkyl of 1 to 6 carbon atoms.

The invention also provides a process for preparing a compound of formula (III): 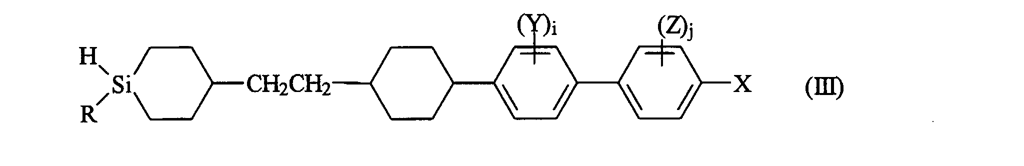 wherein R, Y, X and i are as defined above with respect to formula (II), Z is a halogen or CH₃ and j is a value of 0, 1 or 2, which process comprises either:
(a) reacting a compound of formula (I) as defined above with an organometallic reagent of the formula (8): 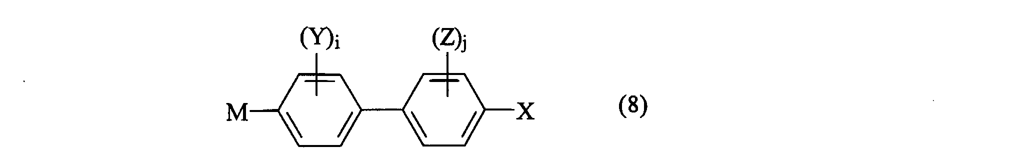 wherein M is Li, MgU, ZnU or TiUₖ(OW)₃₋ₖ wherein U is a halogen, W is an alkyl group and k is zero or an integer of 1 to 3, and X, i and j are each as defined above for formula (III);
(b) subjecting the resulting compound of formula (9): 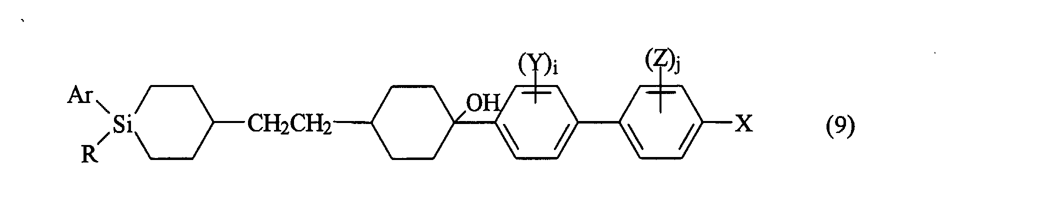 wherein Ar, R, X, Y, Z, i and j are as defined above, to hydrogenolysis or dehydration and hydrogenation; and
(c) subjecting the resulting compound of formula (10) 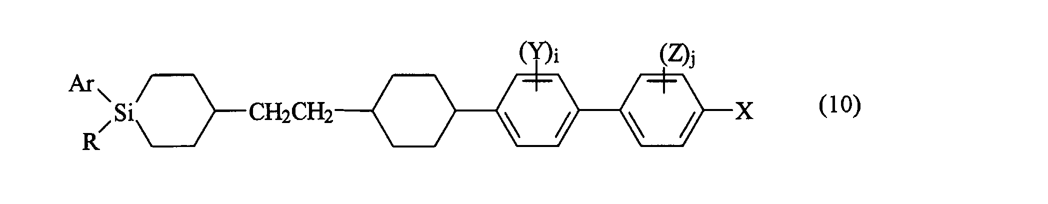 wherein Ar, R, Y, Z, X, i and j are as defined above to de-silylation and reduction, or
(a') reacting a compound of formula (I) as defined above with an organometallic reagent of formula (11): 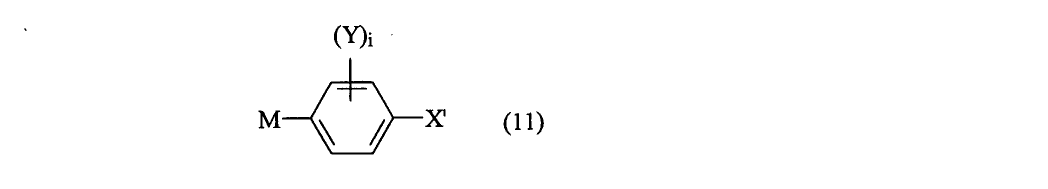 wherein Y and i are as defined above, M represents Li, MgU, ZnU or TiUₖ(OW)₃₋ₖ wherein U is a halogen, W is an alkyl group, k is zero or an integer of 1 to 3 and X' is a halogen;
(b') subjecting the resulting compound of formula (12): 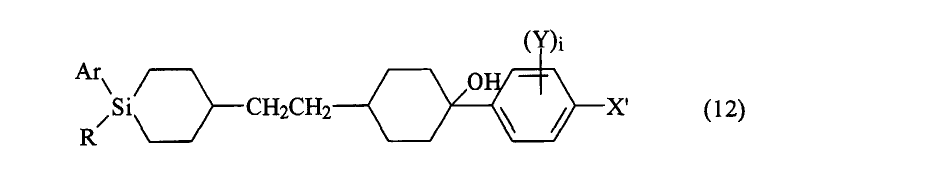 wherein Ar, R, Y, X' and i as defined above to hydrogenolysis or dehydration and hydrogenation;
(c') reacting the resulting compound of formula (13) 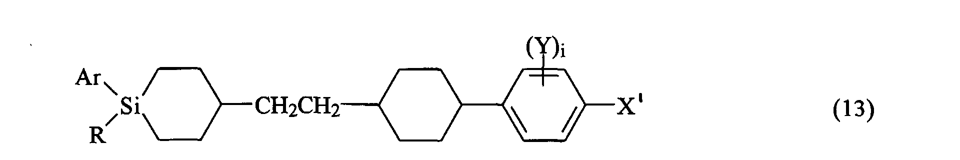 wherein Ar, R, Y, X' and i are as defined above, with an organometallic reagent of formula (14): 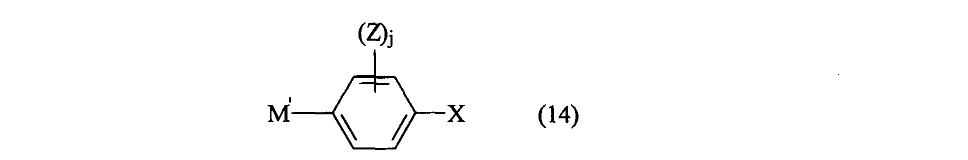 wherein M' is MgU', ZnU' in which U' is a halogen, or B(OV)₂ in which V represents H or an alkyl group, Z is a halogen or CH₃ and j is 0, 1 or 2; and
(d') subjecting the resulting compound of formula (15): 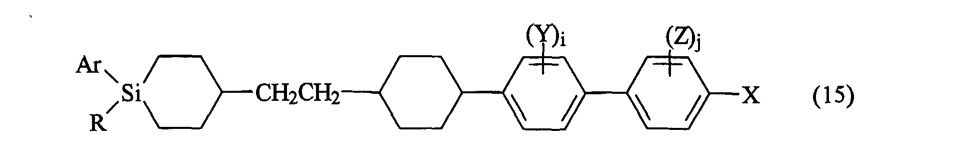 wherein Ar, R,, X, Y, Z, i and j are as defined above, to de-silylation and reduction.

W in the above formulae is preferably alkyl of 1 to 6 carbon atoms. When Y or Z in the above formulae is halogen it is preferably F or Cl. When U or U' is halogen it is preferably Cl, Br or I. when X' is halogen it is preferably Cl, Br or I and when V is an alkyl group it preferably has from 1 to 4 carbon atoms.

Specific examples of the linear alkyl group having from 1 to 10 carbon represented by R include methyl, ethyl, n-propyl, n-butyl, n-pentyl, n-hexyl, n-heptyl, n-octyl, n-nonyl and n-decyl. Specific examples of the mono or difluroalkyl group having from 1 to 10 carbon atoms include fluoromethyl, 1-fluoroethyl, 1-fluoropropyl, 1-fluorobutyl, 1-fluoropentyl, 1-fluorohexyl, 1-fluoroheptyl, 1-fluorooctyl, 1-fluorononyl, 1-fluorodecyl, 2-fluoroethyl, 2-fluoropropyl, 2-fluorobutyl, 2-fluoropentyl, 2-fluorohexyl, 2-fluoroheptyl, 2-fluorooctyl, 2-fluorononyl, 2-fluorodecyl, 3-fluoropropyl, 3-fluorobutyl, 3-fluoropentyl, 3-fluorohexyl, 3-fluoroheptyl, 3-fluorooctyl, 3-fluorononyl, 3-fluorodecyl, 4-fluorobutyl, 4-fluoropentyl, 4-fluorohexyl, 4-fluoroheptyl, 4-fluorooctyl, 4-fluorononyl, 4-fluorodecyl, 5-fluoropentyl, 5-fluorohexyl, 5-fluoroheptyl, 5-fluorooctyl, 5-fluorononyl, 5-fluorodecyl, 6-fluorohexyl, 6-fluoroheptyl, 6-fluorononyl, 6-fluorodecyl, 7-fluoroheptyl, 7-fluorooctyl, 7-fluorononyl, 7-fluorodecyl, 8-fluorooctyl, 8-fluorononyl, 8-fluorodecyl, 9-fluorononyl, 9-fluorodecyl, 10-fluorodecyl, difluoromethyl, 1,1-difluoroethyl, 1,1-difluoropropyl, 1,1-difluorobutyl, 1,1-difluoropentyl, 1,1-difluorohexyl, 1,1-difluoroheptyl, 1,1-difluorooctyl, 1,1-difluorononyl, 1,1-difluorodecyl, 2,2-difluoroethyl, 2,2-difluoropropyl, 2,2-difluorobutyl, 2,2-difluoropentyl, 2,2-difluorohexyl, 2,2-difluoroheptyl, 2,2-difluorooctyl, 2,2-difluorononyl, 2,2-difluorodecyl, 3,3-difluoropropyl, 3,3-difluorobutyl, 3,3-difluoropentyl, 3,3-difluorohexyl, 3,3-difluoroheptyl, 3,3-difluorooctyl, 3,3-difluorononyl, 3,3-difluorodecyl, 4,4-difluorobutyl, 4,4-difluoropentyl, 4,4-difluorohexyl, 4,4-difluoroheptyl, 4,4-difluorooctyl, 4,4-difluorononyl, 4,4-difluorodecyl, 5,5-difluoropentyl, 5,5-difluorohexyl, 5,5-difluoroheptyl, 5,5-difluorooctyl, 5,5-difluorononyl, 5,5-difluorodecyl, 6,6-difluorohexyl, 6,6-difluoroheptyl, 6,6-difluorooctyl, 6,6-difluorononyl, 6,6-difluorodecyl, 7,7-difluoroheptyl, 7,7-difluorooctyl, 7,7-difluorononyl, 7,7-difluorodecyl, 8,8-difluorooctyl, 8,8-difluorononyl, 8,8-difluorodecyl, 9,9-difluorononyl, 9,9-difluorodecyl and 10,10-difluorodecyl.

Specific examples of the branched alkyl group having 3 to 8 carbon atoms include isopropyl, 1-methylpropyl, 2-methylpropyl, sec-butyl, isobutyl, 1-methylbutyl, 2-methylbutyl, 3-methylbutyl, 1-methylpentyl, 2-methylpentyl, 3-methylpentyl, 1-ethylpentyl, 1-methylhexyl, 2-methylhexyl, 3-methylhexyl, 2-ethylhexyl, 3-ethylhexyl, 1-methylheptyl, 2-methylheptyl and 3-methylheptyl.

Specific examples of the alkoxyalkyl group having from 2 to 7 carbon atoms include methoxymethyl, ethoxymethyl, propoxymethyl, butoxymethyl, pentoxymethyl, hexyloxymethyl, methoxyethyl, ethoxyethyl, propoxyethyl, butoxyethyl, methoxypropyl, ethoxypropyl, propoxypropyl, butoxypropyl, methoxybutyl, ethoxybutyl, propoxybutyl, methoxypentyl and ethoxypentyl.

Of these, preferred linear alkyl groups are ones having from 3 to 7 carbon atoms and include, for example, n-propyl, n-butyl, n-pentyl, n-hexyl and n-heptyl. Likewise, preferred mono or difluoroalkyl groups include 2-fluoroethyl, 2-fluoropropyl, 2-fluorobutyl, 2-fluoropentyl, 2-fluorohexyl, 2-fluoroheptyl, 4-fluorobutyl, 4-fluoropentyl, 4-fluorohexyl, 4-fluoroheptyl, 5-fluoroheptyl, 6-fluorohexyl, 7-fluoroheptyl, 2,2-difluoroethyl, 2,2-difluoropropyl, 2,2-difluorobutyl, 2,2-difluoropentyl, 2,2-difluorohexyl, 2,2-difluoroheptyl, 4,4-difluorobutyl, 4,4-difluoropentyl, 4,4-difluorohexyl, 4,4-difluoroheptyl, 5,5-difluoropentyl, 5,5-difluorohexyl, 5,5-difluoroheptyl, 6,6-difluorohexyl, 6,6-difluoroheptyl and 7,7-difluoroheptyl.

Preferred branched alkyl groups include, for example, isopropyl, 1-methylpentyl, 2-methylpentyl, 1-methylbutyl, 2-methylbutyl, 3-methylbutyl, 1-methylpentyl and 2-ethylhexyl.

Preferred alkoxyalkyl groups include, for example, methoxymethyl, methoxyethyl, methoxypropyl, methoxypentyl, ethoxymethyl, ethoxyethyl, propoxymethyl and pentoxymethyl.

The process for producing the compound of formula (I) from an enamine of the above formula (1) and methyl vinyl ketone is conducted according to the Stork method (G. Stork et *al,* J. Amer. Chem. Soc., 85, 207 (1963).

The starting enamine compound can be readily prepared from silacyclohexane carbaldehyde compound, which we have already proposed in Japanese Patent Application NO. 6-123208, filed May 11, 1994 and assigned to the same assignee.

A typical procedure of preparing enamine compounds is described. As shown in the following reaction sequence (16), a silacyclohexane carbaldehyde compound is subjected to Wittig reaction with a ylide compound to obtain an aldehyde compound, followed by conversion to an ester compound, hydrogenation in the presence of a catalyst and reduction to obtain a silacyclohexane aldehyde compound. 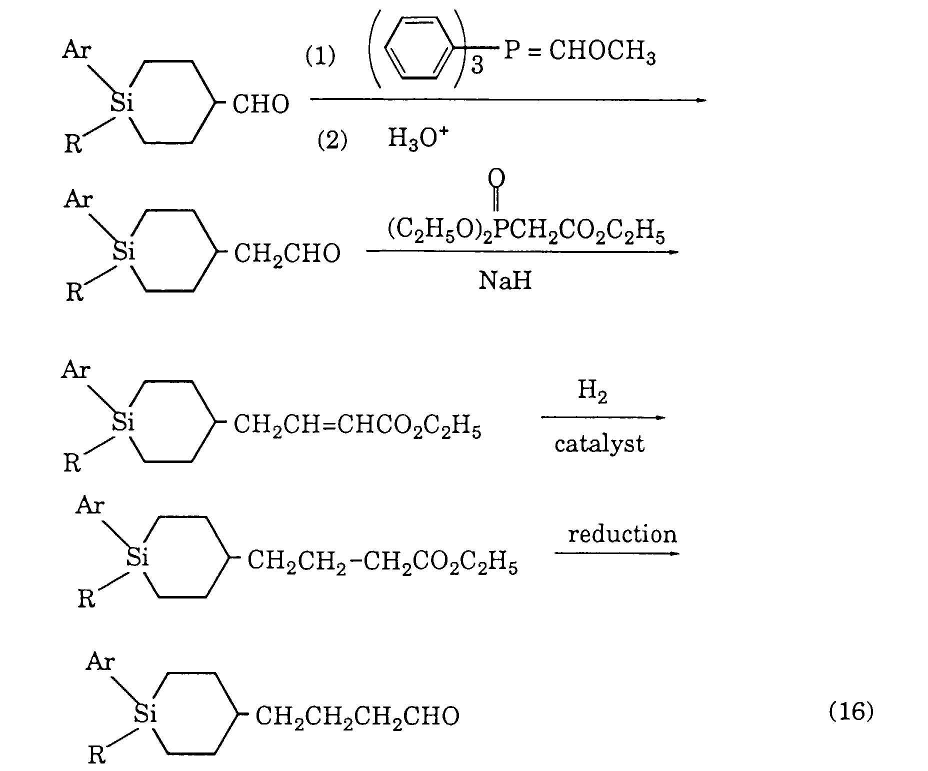 wherein Ar and R are, respectively, as defined hereinbefore.

Then, the aldehyde compound obtained in the above formula (16) is dehydrated with a secondary amine to obtain an enamine compound according to the following reaction formula (17) 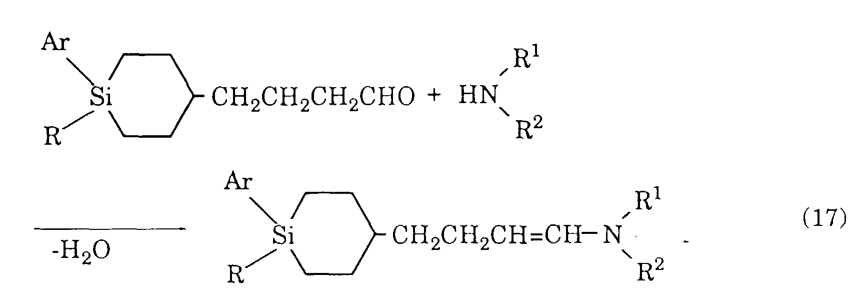 wherein Ar, R, R¹ and R² are, respectively, as defined hereinbefore.

The dehydration reaction is facilitated when using a hydrocarbon solvent such as benzene, toluene, xylene, cumene. n-hexane, n-heptane or iso-octane. The hydrocarbon solvent serves to azeotropically remove the resultant water. For this purpose, the reaction is carried out under refluxing conditions of the solvent. In the case, a catalyst for the dehydration reaction may be used including an acid such as p-toluenesulfonic acid, benzenesulfonic acid, camphorsulfonic acid and the like. Although depending on the structure of aldehyde and the type of catalyst, the catalyst is preferably used in an amount of from 0.1 to 50 wt% based on the aldehyde compound. Alternatively, once formed water may be removed by addition of anhydrous salts such as anhydrous potassium carbonate, anhydrous sodium carbonate and the like. In the case, the reaction is preferably carried out at a temperature ranging from 20°C to a refluxing temperature of a solvent used although the temperature does not appear to be critical. The secondary amines used include dimethylamine, diethylamine, di-n-propylamine, pyrrolidine, piperidine, morpholine and the like. The amine is preferably used at a ratio, to the aldehyde compound, by mole of 1: 1 to 1:3.

In accordance with the present invention, the thus prepared enamine compound is used as one of starting materials for the preparation of the cyclohexane compound. This compound is subjected to Michael's addition reaction with methyl vinyl ketone according to the following reaction formula (18) 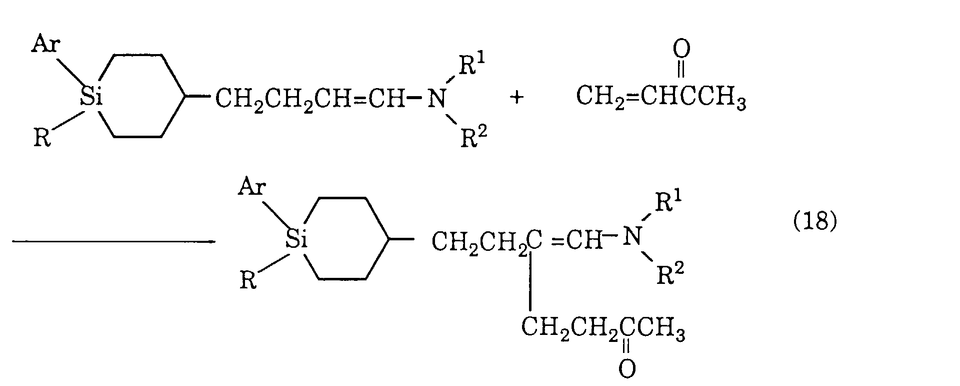 The reaction is carried out at a ratio by equivalent between the enamine compound and methyl vinyl ketone of 1:1 to 5:1, preferably 1:1 to 1.5:1, in a solvent under heating conditions. Preferably, the reaction conditions include a temperature, depending on the structure of enamine, ranging from 0 to 150°C, more preferably under refluxing for a time sufficient to complete the reaction, e.g. several tens minutes to several tens hours. The time may depend on the temperature used. The solvents include, for example, hydrocarbons such as benzene, toluene, xylene, cumene, n-hexane, n-heptane, iso-octane and cyclohexane, ethers such as tetrahydrofuran, diethyl ether, di-n-butyl ether and 1,4-dioxane, alcohols such as methanol, ethanol, propanol and butanol, polar solvents such as N,N-dimethylformamide, dimethylsulfoxide, hexamethylphosphoric triamide, 1,3-dimethyl-2-imidazolidinone and N,N'-dimethylpropylene urea. These solvents may be used singly or in combination. If a protic solvent such as methanol or ethanol is added, the Michael's reaction may proceed within a shorter time owing to the accelerated movement of protons in the Michael' s reaction system.

The resultant Michael's adduct may be then subjected to intramolecular aldol condensation as it is, thereby obtaining a cyclohexenone compound. Alternatively, the adduct may be hydrolyzed with the aid of an inorganic acid such as hydrochloric acid or sulfuric acid, or an organic acid such as oxalic acid, trifluoroacetic acid or chloroacetic acid to obtain an aldehyde compound of the formula (19), followed by intramolecular aldol condensation to obtain a cyclohexenone compound 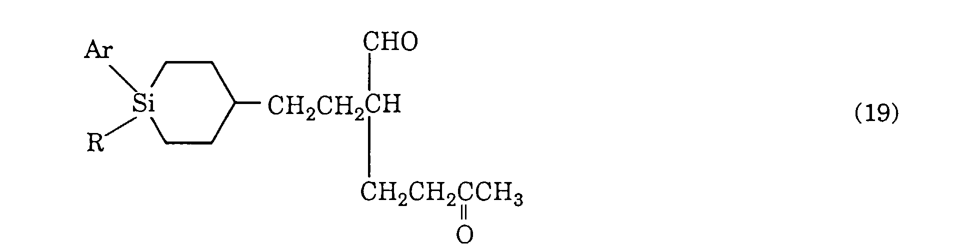 The intramolecular aldol condensation reaction is shown in the following reaction formula (20) 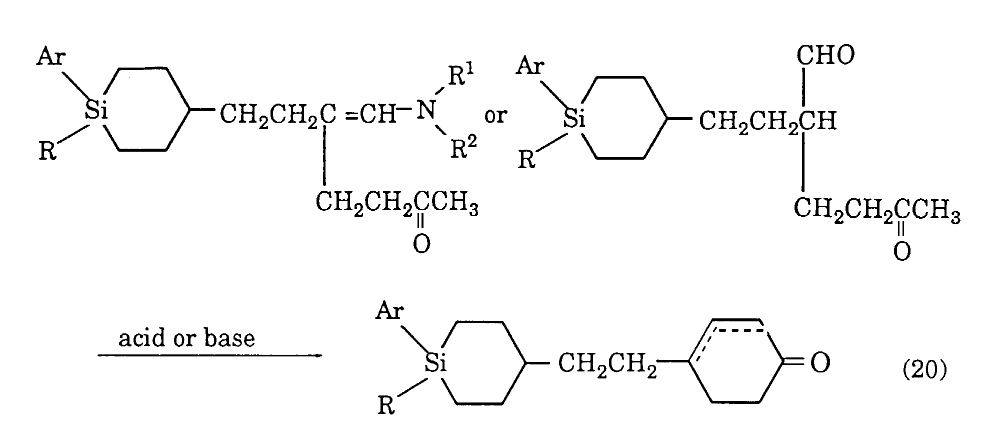 wherein 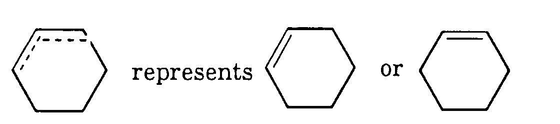 The aldol condensation reaction proceeds in the presence of a base or acid catalyst. The catalyst may be added freshly. It should be noted that the secondary amine used to prepare the enamine compound in the preceding Michael's addition reaction has the catalytic action and the aldol condensation reaction may proceed without addition of any fresh catalytic compound. Although this aldol condensation reaction may proceed at room temperature, a temperature ranging from room temperature to a refluxing temperature of a solvent used is preferred in the practice of the invention.

If used, the base catalysts include, for example, organic bases such as the secondary amines set out hereinbefore, triethylamine, tri-n-butylamine and dimethylaniline, inorganic bases such as sodium carbonate, potassium carbonate, sodium hydrogencarbonate and potassium hydrogencarbonate, and alkoxides such as sodium methoxide, sodium ethoxide and potassium t-butoxide. Examples of the acid catalyst include inorganic acid such as hydrochloric acid and sulfuric acid, and organic acids such as p-toluenesulfonic acid, benzenesulfonic acid, acetic acid, propionic acid, oxalic acid, trifluoroacetic acid and chloroacetic acid. These bases or acids may be used singly or in combination and are properly used while taking into consideration the structure of the ketoaldehyde or the types of groups represented by Ar and R in the ketoaldehyde. The base or acid is preferably used in an amount of 0.1 to 50 wt% based on the starting material, which may depend on the structure of the ketoaldehyde.

During the course of the aldol condensation reaction in the presence of a base catalyst, once produced cyclohexenone compound may be reacted and converted into an enamine compound of the cyclohexenone, i.e. a compound of the following general formula (21) 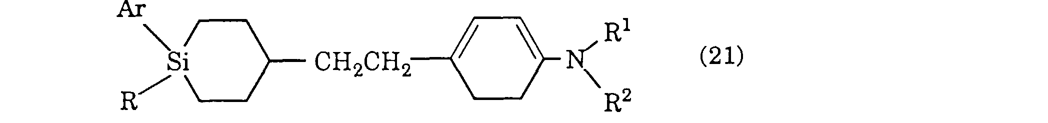 wherein Ar, R, R¹ and R² are, respectively, as defined hereinbefore, or the aldol condensation reaction may stop at the stage where a β-hydroxyketone compound of the following general formula (22) is predominantly formed 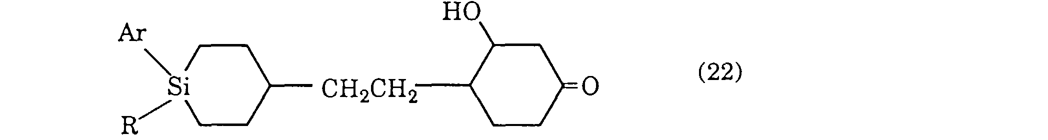 In either case, the cyclohexenone compound indicated in the formula (20) can be obtained by treatment with an acid of the type as set out hereinabove.

The cyclohexenone compound is catalytically reduced or hydrogenated at the double bond thereof to obtain a cyclohexanone compound of the general formula (I) of the present invention. This is particularly shown in the following reaction formula (23)

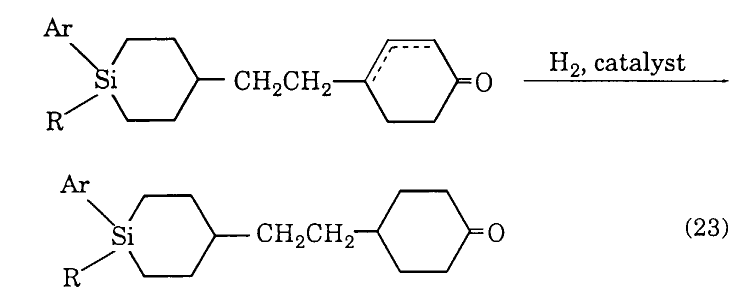

The temperature for the hydrogenation depends on the structure of the cyclohexanone and is not critical. Preferably, the temperature is in the range of from 0 to 150°C, more preferably from 20 to 100°C. Although a higher pressure of hydrogen results in a higher reaction velocity for the same catalyst, limitation may be placed on the type of apparatus used. Accordingly, the pressure is preferably in the range of from an atmospheric pressure to 20 kg/cm².

The catalysts for the hydrogenation include, for example, metals such as palladium, platinum, rhodium, nickel and ruthenium. Better results are obtained using palladium-carbon, palladium-barium sulfate, palladium-diatomaceous earth, platinum oxide, platinum-carbon, rhodium-carbon and Raney nickel. In order to increase the reaction velocity, co-catalysts such as trifluoroacetic acid and perchloric acid may be further added.

The cyclohexanone compound of the general formula (I) obtained in such a manner as set forth hereinabove is used to prepare various types of silacyclohexane compounds. The preparation of the derivatives of the cyclohexanone compound is described.

First, an organometallic reagent readily prepared from a corresponding halide compound is reacted with the cyclohexanone compound, whereupon an alcohol compound it obtained as shown in the following reaction formula (24) 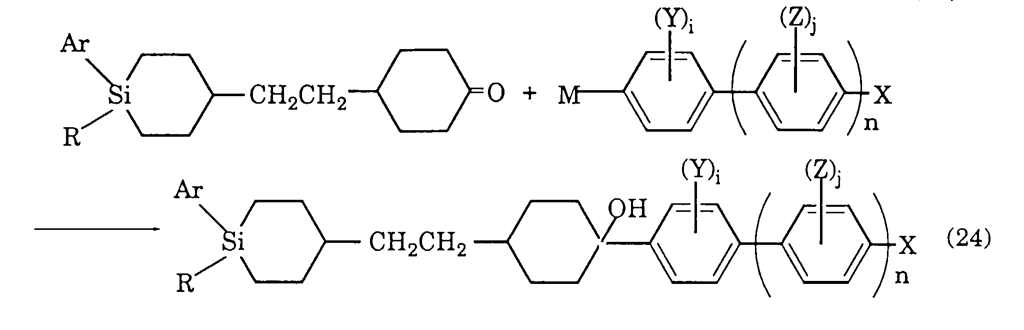 wherein Ar, R, M, X, Y, Z, i and j are, respectively, as defined hereinbefore, and n is a value of 0 or 1.

The organometallic reagents include Grignard reagents, organozinc reagents, organolithium reagents, organotitanium reagents and the like. Using any of these reagents, the reaction proceeds in high yield. The reaction conditions are not critical and may depend on the type of ketone and the structure of an organometallic used and preferably include a temperature of from -70 to 150°C and a time of from 30 minutes to 5 hours. The reaction is usually effected in a solvent. Examples of the solvent include ethers such as diethyl ether, tetrahydrofuran and dioxane, hydrocarbons such as benzene, toluene, xylene, mesitylene, hexane, heptane and octane, or mixtures thereof.

Thereafter, the alcohol compound is converted to a cyclohexanone compound either by hydrogenolysis or by dehydration reaction in the presence of an acid catalyst and then hydrogenation of the resultant double bond according to the following reaction formula

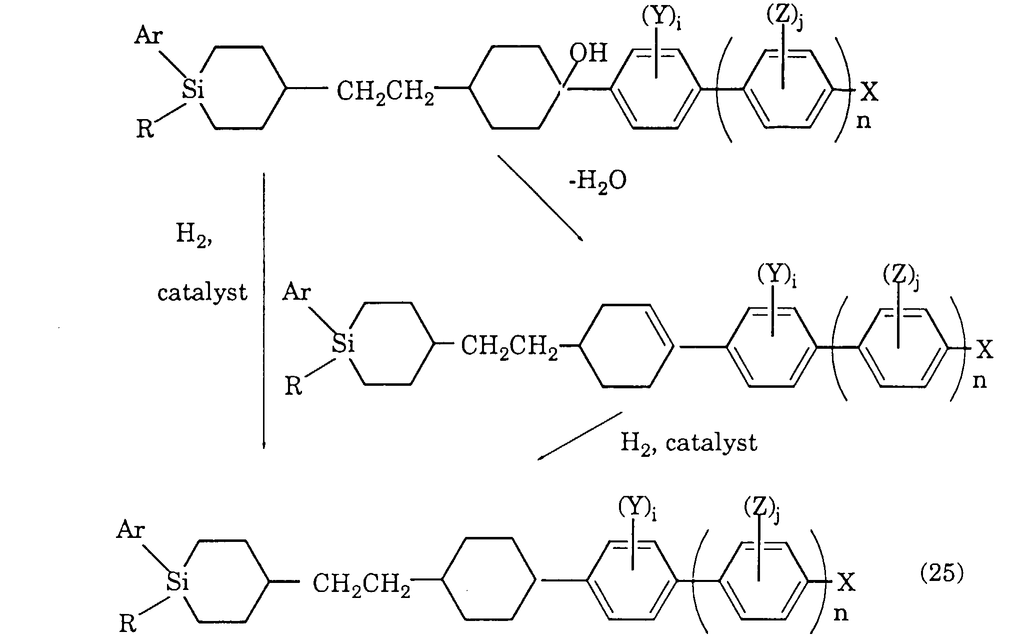

The reaction conditions vary depending on the structure of the alcohol. The hydrogenolysis effectively proceeds in the presence of a catalyst, preferably, under conditions of a temperature ranging from 0 to 150°C, more preferably from 20 to 100°C and a pressure of hydrogen ranging from an atmospheric pressure to 20 kg/cm² although a lower or higher pressure may be used. A lower pressure results in a lower reaction velocity and a higher pressure will require a more expensive apparatus. Accordingly, the reaction conditions and the type of reactor should be properly used in view of economy. Examples of the catalyst include metals such as palladium, platinum, rhodium, nickel and ruthenium. Better results are obtained using palladium-carbon, palladium-barium sulfate, palladium-diatomaceous earth, platinum oxide, platinum-carbon, rhodium-carbon, Raney nickel, palladium oxide and Ni-diatomaceous earth. Of these, it is more preferred to use Ni and Pd-based catalysts.

Alternatively, the alcohol compound may be first dehydrated in the presence of an acid catalyst by a usual manner. The acids used for the dehydration reaction include, for example, inorganic acids such as hydrochloric acid, sulfuric acid, nitric acid, perchloric acid and salts thereof, and organic acids such as p-toluenesulfonic acid, camphorsulfonic acid and trifluoroacetic acid. In order to quickly remove the resultant water, hydrocarbons may be used as a solvent, including benzene, toluene, xylene. cumene, hexane and iso-octane. These hydrocarbons assist in speeding the reaction through azeotropy.

The resultant double bond is then hydrogenated in the presence of a catalyst as defined with respect to the hydrogenolysis to provide a cyclohexanone compound. The hydrogenation is preferably effected in the same manner as in the hydrogenation reaction set out with respect to the formula (23). It will be noted that a higher reaction velocity and a higher pressure of hydrogen require a more expensive reactor. In this sense, the reactions set out hereinbefore should be so controlled that they are conducted under conditions as economically beneficial as possible while taking into account the types or structures of reactants used in the respective steps.

Subsequently, the cyclohexanone compound is subjected to de-silylation reaction with an electrophilic reagent to provide a halosilacyclohexane compound, followed by reduction reaction to obtain a silacyclohexane compound. This is particularly shown in the following reaction sequence (26) 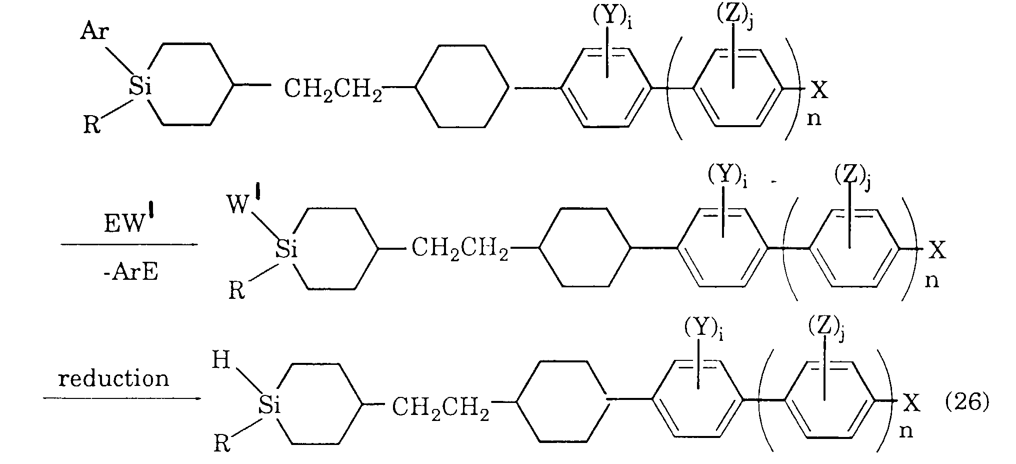 wherein EW' represents an electrophilic reagent in which E is a halogen or a counter atom or group for W' and W' is a halogen, preferably Cl, I or Br.

More particularly, the electrophilic reagents include, for example, halogens, hydrogen halides, metal halides, sulfonic derivatives, acid halides, alkyl halides and the like. Preferable examples include iodine, bromine, chlorine, iodine monochloride, hydrogen chloride, hydrogen bromide, hydrogen iodide, mercury (II) halide, trimethylsilyl chlorosulfonate, acetyl chloride, acetyl bromide, benzoyl chloride and t-butyl chloride. In order to increase the reaction velocity, either addition of Lewis acids such as aluminium chloride, zinc chloride, titanium tetrachloride and boron trifluoride, or irradiation of visible light or UV light is effective. The de-silylation reaction may be carried out in a wide range of temperature. The temperature is preferably in the range of from 0 to 80°C, more preferably from 10 to 40°C. The electrophilic reagent is preferably used at a ratio by mole between the cyclohexanone compound and the electrophilic reagent of 1:1 to 1:5, more preferably 1:1 to 1:2.

The reagents used for the reduction of the resultant halosilacyclohexane compound include, for example, metal hydrides such as sodium hydride, potassium hydride, trialkylsilanes, boranes and dialkyl aluminium compounds, complex hydrides such as lithium aluminium hydride, sodium borohydride, lithium borohydride, potassium borohydride and tributylammonium borohydride, and substituted hydrides thereof such as lithium trialkoxyaluminohydride, sodium di(methoxyethoxy)aluminohydride, lithium triethylborohydride and sodium cyanoborohydride.

Although not limitative, the reduction of the halosilacyclohexane is carried out preferably at a temperature of from 0 to 150°C, more preferably from 20 to 120°C.

By the above process, a silacyclohexane compound can be prepared. This compound may be used as a liquid crystal as it is or after separation into a trans form of the compound by a usual manner such as chromatography.

Among the products obtained according to the afore-indicated reaction formula (25), a compound of the following formula (27), corresponding to a final compound of the formula (25) wherein n = 0, 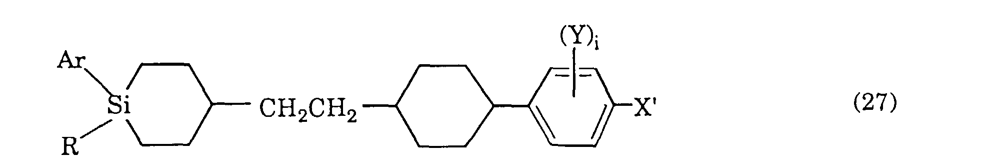 wherein Ar, R, Y and i are, respectively, as defined hereinbefore and X' represents a halogen preferably including Cl, Br or I, is used to prepare a compound of the following general formula (28) which corresponds to the final compound of the general formula (25) wherein n = 1

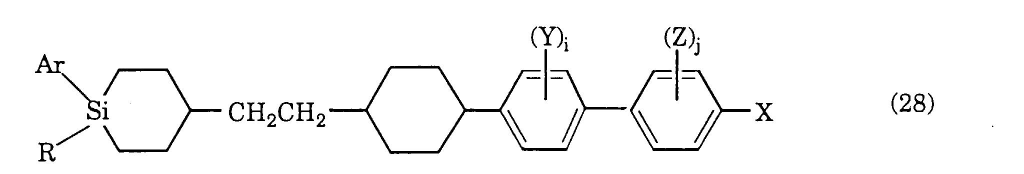

The above reaction proceeds according to the following reaction formula (29) 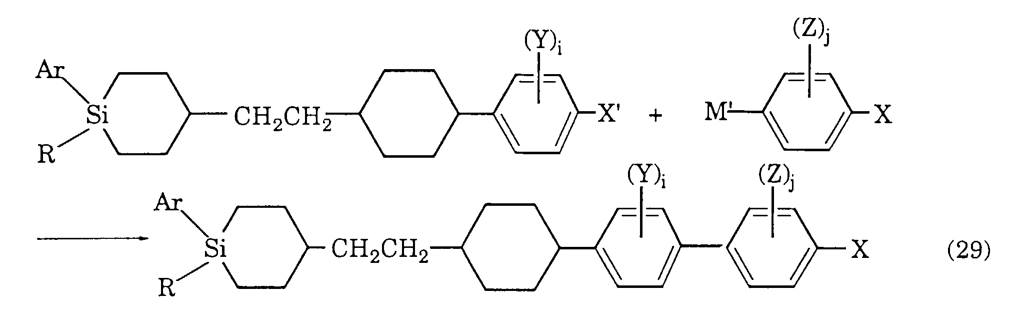 wherein M' represents MgU, ZnU wherein U represents a halogen and preferably Cl, Br or I, or B(OV) wherein V represents a hydrogen atom or an alkyl group preferably having from 1 to 4 carbon atoms.

This reaction is carried in the presence of a catalyst of a transition metal compound. Preferred examples of the catalyst include palladium or nickel compounds. The palladium catalysts include, for example, zero valent palladium compounds such as tetrakis(triphenylphosphine)palladium (0) and di-[1,2-bis(diphenylphosphino)ethane]palladium (0), compounds consisting of divalent palladium compounds, such as palladium acetate, palladium chloride, and [1,1-bis(diphenylphosphino)ferrocene]palladium (II) chloride, and combinations of those compounds mentioned above with reducing agents.

Examples of the nickel catalyst include divalent nickel compounds such as 1,3-bis (diphenylphosphino)propane nickel (II) chloride, 1,2-bis(diphenylphosphino)ethane nickel (II) chloride and bis(triphenylphosphine) nickel (II) chloride, zero valent nickel compounds such as tetrakis(triphenylphosphine) nickel (0).

If the organometallic compound used is a boric acid derivative wherein M' represents B(OV)₂, it is preferred that the reaction is carried out in the presence of a base. Examples of the base include inorganic bases such as sodium carbonate, sodium hydrogencarbonate, potassium carbonate, sodium hydroxide, sodium hydrogencarbonate, potassium carbonate, sodium hydroxide and potassium hydroxide, and organic bases such as triethylamine, tributylamine and dimethylaniline. The reaction of the formula (29) is preferably effected at a temperature ranging from 0 to 150°C, more preferably from 20 to 120°C.

The compound obtained according to the reaction formula (29) can be converted into a silacyclohexane compound according to the reaction sequence (26) indicated before.

The thus prepared compounds may be purified by a usual manner such as recrystallization or chromatography, thereby obtaining silacyclohexane-based liquid crystal compounds in an intended trans form, if necessary.

It will be noted that in the processes set out hereinbefore, the respective steps do not seem to be critical with respect to the reaction temperature, reaction time and other reaction conditions although preferred ranges of the temperature in the respective steps are set forth. Higher temperatures usually result in a higher reaction velocity but additional heating energy is required. Higher or lower pressure may be used but normal pressures are suitably used in the practice of the invention. Fundamentally, the reactions in the respective steps may proceed stoichiometrically. Anyway, operating conditions of the reactions in the respective steps especially, the temperature and the time, are interrelated, e.g. a higher temperature leads to a shorter reaction time.

The present invention is more particularly described by way of examples.

### Example 1

### Preparation of 4-(2-(4-pentyl-4-phenyl-4-silacyclohexyl)ethyl)cyclohexanone

25.0 g of ethyl diethylphosphonoacetate was dropped in a mixture of 2.70 g of sodium hydride and 80 ml of tetrahydrofuran at 0°C. After agitation at 0°C for 30 minutes, 28.0 g of (4-n-pentyl-4-phenyl-4-silacyclohexyl)acetaldehyde was dropped in the mixture. The reaction mixture was agitated at 0°C for 5 hours, after which it was poured into water and extracted with ethyl acetate. The resultant ethyl acetate solution was washed with brine, dried and concentrated, followed by purification through silica gel chromatography to obtain 27.6 g (yield: 79%) of ethyl 4-(4-n-pentyl-4-phenyl-4-silacyclohexyl)-2-butenate.

The thus obtained product was subjected to ¹H-NMR and IR analyses with the results shown below.
¹H-NMR (CDCl₃) δ: 0.50-2.25 (25H, m), 4.01-4.33 (2H, m), 5.60-5.92 (1H, m), 6.70-7.13 (1H, m), 7.15-7.60 (5H, m) ppm
IR (liquid film) νₘₐₓ: 2956, 2918, 2854, 1722, 1653, 1267, 1182, 1138, 1111, 1045, 978, 852 cm⁻¹

27.0 g of the product was dissolved in 120 ml of ethanol, followed by hydrogenation in the presence of 0.5 g of a palladium-carbon catalyst at a pressure of 8 kg/cm². After consumption of hydrogen in a theoretical amount, the catalyst was removed by filtration. The resultant filtrate was concentrated to obtain 26.8 g (yield: 99%) of ethyl 4-(2-(4-n-pentyl-4-phenyl-4-silacyclohexyl)butanoate.

The results of ¹H-NMR and IR analyses are shown below.
¹H-NMR (CDCl₃) δ: 0.50-2.10 (27H, m), 2.10-2.40 (2H, m), 3.97-4.25 (2H, q), 7.20-7.60 (5H, m) ppm
IR (liquid film) νₘₐₓ: 2956, 2918, 2852, 1738, 1427, 1404, 1373, 1242, 1180, 1111 cm⁻¹

25.0 g of the thus obtained product was dissolved in 100 ml of toluene, in which 75 ml of a toluene solution of 0.99 mols of diisobutylaluminium (DIBAL) was dropped at -70°C. After agitation at -70°C for 1 hour, methanol was added so that excess reducing agent was quenched. While agitating the mixture at 0°C, a saturated sodium tartrate aqueous solution was added. The toluene phase or solution was collected, washed with brine, dried and concentrated, followed by purification through silica gel chromatography to obtain 15.2 g (yield: 69%) of 4-(4-n-pentyl-4-phenyl-4-silacyclohexyl)butanal.

The thus obtained product was subjected to NMR and IR analyses with the results shown below.
¹H-NMR (CDCl₃) δ: 0.50-2.18 (24H, m), 2.20-2.51 (2H, m), 7.26-7.60 (5H, m), 9.18-9.32 (1H, m) ppm
IR (liquid film) νₘₐₓ: 2920, 2850, 1725, 1455, 1425, 1405, 1110 cm⁻¹

A mixture of 14.8 g of the product, 3.52 g of pyrrolidine and 100 ml of benzene was refluxed, under which generated water was distilled off. When the generation of water was stopped, a mixture of 3.92 g of methyl vinyl ketone and 80 ml of methanol was added to the first-mentioned mixture, followed by agitation at room temperature for 48 hours. 30 ml of acetic acid, 15 g of sodium acetate and 30 ml of water were added to the reaction mixture and agitated for 4 hours. The resultant reaction mixture was extracted with benzene, washed with brine, dried and concentrated to obtain 12.2 g (yield: 71%) of 4-(2-(4-n-pentyl-4-phenyl-4-silacyclohexyl)ethyl)-2-cyclohexenone. The results of NMR and IR analyses are shown below.
¹H-NMR (CDCl₃) δ: 0.50-2.70 (29H, m), 5.97 (1H, dt), 6.72- 6.96 (1H, m), 7.26-7.62 (5H, m) ppm
IR (liquid film) ν ₘₐₓ: 2920, 2850, 1680, 1450, 1420, 1105 cm⁻¹

12.0 g of this product was dissolved in 60 ml of ethyl acetate, followed by hydrogenation in the presence of 0.25 g of a palladium-carbon catalyst at a pressure of 8 kg/cm². After theoretical consumption of hydrogen, the catalyst was removed by filtration. The resultant filtrate was concentrated to obtain 11.6 g (yield: 96%) of the intended product. The results of NMR and IR analyses are shown below.
¹H-NMR (CDCl₃) δ: 0.50-2.52 (33H, m), 7.26-7.62 (5H, m) ppm
IR (liquid film) ν ₘₐₓ: 2920, 2850, 1715, 1455, 1420, 1110 cm⁻¹

### Example 2

### Preparation of 4-(2-(4,4-diphenyl-4-silacyclohexyl)ethyl)cyclohexanone

The general procedure of Example 1 was repeated except that (4,4-diphenyl-4-silacyclohexyl)acetaldehyde was used in place of (4-n-pentyl-4-phenyl-4-silacyclohexyl)acetaldehyde of Example 1, thereby obtaining 4-(2-(4,4-diphenyl-4-silacyclohexyl)ethyl)cyclohexanone.

### Example 3

### Preparation of 4-(2-(4-(n-propyl)-4-phenyl-4-silacyclohexyl)ethyl)cyclohexanone

The general procedure of Example 1 was repeated except that (4-n-propyl-4-phenyl-4-silacyclohexyl)acetaldehyde was used in place of (4-n-pentyl-4-phenyl-4-silacyclohexyl)acetaldehyde of Example 1, thereby obtaining 4-(2-(4-(n-propyl)-4-phenyl-4-silacyclohexyl)ethyl)cyclohexanone.

### Example 4

### Preparation of 4-(2-(4-(4-methoxybutyl)-4-phenyl-4-silacyclohexyl)ethyl)cyclohexanone

The general procedure of Example 1 was repeated except that (4-(4-methoxybutyl)-4-phenyl-4-silacyclohexyl)acetaldehyde was used in place of (4-n-pentyl-4-phenyl-4-silacyclohexyl)acetaldehyde of Example 1, thereby obtaining 4-(2-(4-(4-methoxybutyl)-4-phenyl-4-silacyclohexyl)ethyl)cyclohexanone.

### Example 5

### Preparation of 4-(2-(4-(4-methylpentyl)-4-p-tolyl-4-silacyclohexyl)ethyl)cyclohexanone

The general procedure of Example 1 was repeated except that (4-(4-methylpentyl)-4-p-tolyl-4-silacyclohexyl)acetaldehyde was used in place of (4-n-pentyl-4-phenyl-4-silacyclohexyl)acetaldehyde of Example 1, thereby obtaining 4-(2-(4-(4-methylpentyl)-4-p-tolyl-4-silacyclohexyl)ethyl)cyclohexanone.

### Example 6

### Preparation of 4-(2-(4-ethyl-4-p-tolyl-4-silacyclohexyl)ethyl)cyclohexanone

The general procedure of Example 1 was repeated except that (4-ethyl-4-p-tolyl-4-silacyclohexyl)acetaldehyde was used in place of (4-n-pentyl-4-phenyl-4-silacyclohexyl)acetaldehyde of Example 1, thereby obtaining 4-(2-(4-ethyl-4-p-tolyl-4-silacyclohexyl)ethyl)cyclohexanone.

### Example 7

### Preparation of trans, trans-4-(2-(4-(3,4,5-trifluorophenyl)cyclohexyl)ethyl)-1-n-pentyl- 1-silacyclohexane

1.02 g of 4-(2-(4-n-pentyl-4-phenyl-4-silacyclohexyl)ethyl)cyclohexanone was dropped in 3.5 ml of a tetrahydrofuran solution of 1.0 mol of 3,4,5-trifluorophenylmagnesium bromide at room temperature. After agitation at room temperature for 2 hours, the resultant mixture was poured into an ammonium chloride aqueous solution and extracted with benzene. 80 mg of p-toluenesulfonic acid monohydrate was added to the benzene solution, followed by removal of generated water under reflux. When the generation of water was stopped, the benzene solution was washed with brine, dried and concentrated, followed by purification through silica gel chromatography to obtain 1.25 g (yield: 94%) of 4-(2-(4-(3,4,5-trifluorophenyl)-3-cyclohexenyl)ethyl)- 1-n-pentyl- 1-phenyl- 1-silacyclohexane.

1.23 g of the product was dissolved in 30 ml of ethyl acetate and hydrogenated in the presence of 80 mg of a palladium-carbon catalyst at a pressure of 10 kg/cm² of hydrogen. After theoretical consumption of hydrogen, the catalyst was removed by filtration. The resultant filtrate was concentrated to obtain 1.23 g (quantitative amount) of 4-(2-(4-(3,4,5-trifluorophenyl)cyclohexyl)ethyl)-1-n-pentyl-1-phenyl-1-silacyclohexane.

3 ml of a carbon tetrachloride solution of 1.0 mol of iodine monochloride was added to 1.20 g of the product at room temperature. After agitation for 30 minutes, the mixture was concentrated. The resultant residue was dissolved in 10 ml of tetrahydrofuran, followed by dropping in a mixture of 200 mg of lithium aluminum hydride and 25 ml of tetrahydrofuran at 0°C. The reaction mixture was agitated for 10 hours, poured into dilute hydrochloric acid, and extracted with methylene chloride. The methylene chloride solution was washed with brine, dried and concentrated, followed by purification through silica gel chromatography to obtain 320 mg (yield: 32%) of the intended product. The results of measurement of phase temperatures and also of IR analysis are shown below.
Crystal phase-nematic phase transition temperature: 24.4°C
Nematic phase-isotropic phase transition temperature: 45.5°C
IR (liquid film) νₘₐₓ: 2922, 2852, 2100, 1614, 1531, 1444, 1346, 1234, 1039, 887, 847 cm⁻¹

### Example 8

### Preparation of trans, trans-4-(2-(4-(4-chlorophenyl)cyclohexyl)ethyl)-1-n-pentyl-1-silacyclohexane

The general procedure of Example 7 was repeated using a tetrahydrofuran solution of 1.0 mol of chlorophenylmagnesium bromide in place of the tetrahydrofuran solution of 1.0 mol of 3,4,5-trifluorophenylmagnesium bromide of Example 7, thereby obtaining trans, trans-4-(2-(4-(4-chlorophenyl)cyclohexyl)ethyl)-1-n-pentyl-1-silacyclohexane. The results of ¹³C-NMR and IR analyses are shown below.
¹³C-NMR (CDCl₃) δ: 9.63 (s), 12.11 (s), 14.01 (s), 22.36 (s), 24.11 (s), 31.59 (s), 33.52 (s), 34.29 (s), 34.70 (s), 34.91 (s), 35.39 (s), 37.63 (s), 40.67 (s), 44.03 (s), 128.15 (s), 128.31 (s), 131.30 (s), 146.26 (s) ppm
IR (KBr disc) νₘₐₓ: 2916, 2846, 2096, 1493, 1092, 889, 818 cm⁻¹

### Example 9

### Preparation of trans, trans-4-(2-(4-(4-fluorophenyl)cyclohexyl)ethyl)-1-ethyl-1-silacyclohexane

1.02 g of 4-(2-(4-ethyl-4-p-tolyl-4-silacyclohexyl)ethyl)cyclohexanone was dropped in 3.5 ml of a tetrahydrofuran solution of 1.0 mol of 4-fluorophenylmagnesium bromide at room temperature. After agitation at room temperature for 2 hours, the resultant mixture was poured into an ammonium chloride aqueous solution and extracted with benzene. 80 mg of p-toluenesulfonic acid monohydrate was added to the benzene solution, followed by removal of generated water under reflux. When the generation of water was stopped, the benzene solution was washed with brine, dried and concentrated, followed by purification through silica gel chromatography to obtain 1.20 g (yield: 92%) of 4-(2-(4-(4-fluorophenyl)-3-cyclohexenyl)ethyl)-1-ethyl-1-p-tolyl-silacyclohexane.

1.20 g of the product was dissolved in 30 ml of ethyl acetate and hydrogenated in the presence of 80 mg of a palladium-carbon catalyst at a pressure of 10 kg/cm² of hydrogen. After theoretical consumption of hydrogen, the catalyst was removed by filtration. The resultant filtrate was concentrated to obtain 1.20 g (quantitative amount) of 4-(2-(4-(4-fluorophenyl)cyclohexyl)ethyl)-1-ethyl-1-p-tolyl-1-silacyclohexane.

3 ml of a carbon tetrachloride solution of 1.0 mol of iodine monochloride was added to 1.20 g of the product at room temperature. After agitation for 30 minutes, the mixture was concentrated. The resultant residue was dissolved in 10 ml of tetrahydrofuran, followed by dropping in a mixture of 200 mg of lithium aluminum hydride and 25 ml of tetrahydrofuran. The reaction mixture was agitated for 10 hours, poured into dilute hydrochloric acid, and extracted with methylene chloride. The methylene chloride solution was washed with brine, dried and concentrated, followed by purification through silica gel chromatography to obtain 320 mg (yield: 32%) of the intended product. The results of NMR and IR analyses are shown below.
¹³C-NMR (CDCl₃) δ: 4.04 (s), 7.95 (s), 9.03 (s), 31.48 (s), 33.58 (s), 34.51 (s), 34.66 (s), 34.92 (s), 37.64 (s), 40.64 (s), 43.88 (s), 114.88 (d), 128.04 (d), 143.47 (d), 161.10 (d) ppm
IR (KBr disc) ν ₘₐₓ: 2914, 2850, 2110, 1508, 1219, 816, 766 cm⁻¹

### Example 10

### Preparation of trans, trans-4-(2-(4-(4-fluorophenyl)cyclohexyl)ethyl)-1-n-propyl-1-silacyclohexane

The general procedure of Example 9 was repeated using 4-(2-(4-n-propyl-4-phenyl-4-silacyclohexyl)ethyl)cyclohexanone in place of 4-(2-(4-ethyl-4-p-tolyl-4-silacyclohexyl)ethyl)cyclohexanone of Example 9, thereby obtaining trans, trans-4-(2-(4-(4-fluorophenyl)cyclohexyl)ethyl)-1-n-propyl-1-silacyclohexane. The results of ¹³C-NMR and IR analyses are shown below.
¹³C-NMR (CDCl₃) δ: 9.66 (s), 14.72 (s), 17.82 (s), 17.95 (s), 31.60 (s), 33.59 (s), 34.52 (s), 34.73 (s), 34.93 (s), 37.66 (s), 40.69 (s), 43.88 (s), 114.88 (d), 128.03 (d), 143.45 (d), 161.11 (d) ppm
IR (KBr disc) ν ₘₐₓ: 2916, 2848, 2106, 1508, 1221, 885, 833,825 cm⁻¹

### Example 11

### Preparation of trans, trans-4-(2-(4-(4-fluorophenyl)cyclohexyl)ethyl)-1-n-pentyl-1-silacyclohexane

The general procedure of Example 9 was repeated using 4-(2-(4-n-pentyl-4-phenyl-4-silacyclohexyl)ethyl)cyclohexanone in place of 4-(2-(4-ethyl-4-p-tolyl-4-silacyclohexyl)ethyl)cyclohexanone of Example 9, thereby obtaining trans, trans-4-(2-(4-(4-fluorophenyl)cyclohexyl)ethyl)-1-n-pentyl-1-silacyclohexane. The results of ¹³C-NMR and IR analyses are shown below.
¹³C-NMR (CDCl₃) δ: 9.67 (s), 12.14 (s), 14.02 (s), 22.39 (s), 24.15 (s), 31.63 (s), 33.61 (s), 34.54 (s), 34.78 (s), 34.98 (s), 35.43 (s), 37.71 (s), 40.75 (s), 43.90 (s), 114.88 (d), 128.01 (d), 143.39 (d), 161.13 (d) ppm
IR (KBr disc) ν ₘₐₓ: 2916, 2848, 2102, 1508, 1221, 1159, 885, 833 cm⁻¹

### Example 12

### Preparation of trans, trans-4-(2-(4-(3,4-difluorophenyl)cyclohexyl)ethyl)-1-ethyl-1-silacyclohexane

1.02 g of 4-(2-(4-ethyl-4-p-tolyl-4-silacyclohexyl)ethyl)cyclohexanone was dropped in 3.5 ml of a tetrahydrofuran solution of 1.0 mol of 3,4-difluorophenylmagnesium bromide at room temperature. After agitation at room temperature for 2 hours, the resultant mixture was poured into an ammonium chloride aqueous solution and extracted with benzene. 80 mg of p-toluenesulfonic acid monohydrate was added to the benzene solution, followed by removal of generated water under reflux. When the generation of water was stopped, the benzene solution was washed with brine, dried and concentrated, followed by purification through silica gel chromatography to obtain 1.23 g (yield: 91%) of 4-(2-(4-(3,4-fluorophenyl)-3-cyclohexenyl)ethyl)-1-ethyl-1-p-tolyl-silacyclohexane.

1.20 g of the product was dissolved in 30 ml of ethyl acetate and hydrogenated in the presence of 80 mg of a palladium-carbon catalyst at a pressure of 10 kg/cm² of hydrogen. After theoretical consumption of hydrogen, the catalyst was removed by filtration. The resultant filtrate was concentrated to obtain 1.20 g (quantitative amount) of 4-(2-(4-(3,4-difluorophenyl)cyclohexyl)ethyl)-1-ethyl-1-p-tolyl-1-silacyclohexane.

3 ml of a carbon tetrachloride solution of 1.0 mol of iodine monochloride was added to 1.20 g of the product at room temperature. After agitation for 30 minutes, the mixture was concentrated. The resultant residue was dissolved in 10 ml of tetrahydrofuran, followed by dropping in a mixture of 200 mg of lithium aluminum hydride and 25 ml of tetrahydrofuran at 0°C. The reaction mixture was agitated for 10 hours, poured into dilute hydrochloric acid, and extracted with methylene chloride. The methylene chloride solution was washed with brine, dried and concentrated, followed by purification through silica gel chromatography to obtain 320 mg (yield: 32%) of the intended product. The results of NMR and IR analyses are shown below.
¹³C-NMR (CDCl₃) δ: 4.04 (s), 7.95 (s), 9.04 (s), 31.48 (s), 33.42 (s), 34.32 (s), 34.64 (s), 34.86 (s), 37.58 (s), 40.64 (s), 43.83 (s), 43.85 (s), 115.41 (d), 122.50 (dd), 144.87 (dd), 148.51 (dd), 150.15 (dd) ppm
IR (KBr disc) ν ₘₐₓ: 2920, 2850, 2098, 1518, 1290, 1286, 887, 816, 769 cm⁻¹

### Example 13

### Preparation of trans, trans-4-(2-(4-(3,4-difluorophenyl)cyclohexyl)ethyl)-1-n-propyl-1-silacyclohexane

The general procedure of Example 12 was repeated using 4-(2-(4-n-propyl-4-phenyl-4-silacyclohexyl)ethyl)cyclohexanone in place of 4-(2-(4-ethyl-4-p-tolyl-4-silacyclohexyl)ethyl)cyclohexanone of Example 12, thereby obtaining trans, trans-4-(2-(4-(3,4-difluorophenyl)cyclohexyl)ethyl)-1-n-propyl-1-silacyclohexane. The results of ¹³C-NMR and IR analyses are shown below.
¹³C-NMR (CDCl₃) δ: 9.65 (s), 14.71 (s), 17.80 (s), 17.94 (s), 31.59 (s), 33.41 (s), 34.32 (s), 34.68 (s), 34.84 (s), 37.57 (s), 40.66 (s), 43.83 (s), 115.41 (d), 116.74 (d), 122.50 (d), 144.87 (dd), 148.51 (dd), 150.15 (dd) ppm
IR (KBr disc) ν max: 2922, 2850, 2100, 1518, 1288, 887, 843, 816 cm⁻¹

### Example 14

### Preparation of trans, trans-4-(2-(4-(3,4-difluorophenyl)cyclohexyl)ethyl)-1-n-pentyl-1-silacyclohexane

The general procedure of Example 12 was repeated using 4-(2-(4-n-pentyl-4-phenyl-4-silacyclohexyl)ethyl)cyclohexanone in place of 4-(2-(4-ethyl-4-p-tolyl-4-silacyclohexyl)ethyl)cyclohexanone of Example 12, thereby obtaining trans, trans-4-(2-(4-(3,4-difluorophenyl)cyclohexyl)ethyl)-1-n-pentyl-1-silacyclohexane. The results of ¹³C-NMR and IR analyses are shown below.
¹³C-NMR (CDCl₃) δ: 9.62 (s), 12.10 (s), 13.99 (s), 22.35 (s), 24.09 (s), 31.57 (s), 33.41 (s), 34.32 (s), 34.66 (s), 34.84 (s), 35.38 (s), 37.56 (s), 40.65 (s), 43.83 (s), 115.41 (d), 116.74 (d), 122.50 (dd), 144.84 (dd), 148.51 (dd), 150.15 (dd) ppm
IR (KBr disc) ν ₘₐₓ: 2920, 2850, 2098, 1518, 1286, 887, 816 cm⁻¹

### Example 15

### Preparation of trans, trans-4-(2-(4-(4-trifluoromethoxyphenyl)cyclohexyl)ethyl)-1-n-propyl-1-silacyclohexane

1.0 g of 4-(2-(4-n-propyl-4-phenyl-4-silacyclohexyl)ethyl)cyclohexanone was dropped in 3.5 ml of a tetrahydrofuran solution of 1.0 mol of 4-trifluoromethoxyphenyl lithium at -50°C. After raising to room temperature in 2 hours, the resultant mixture was poured into an ammonium chloride aqueous solution and extracted with benzene. 80 mg of p-toluenesulfonic acid monohydrate was added to the benzene solution, followed by removal of generated water under reflux. When the generation of water was stopped, the benzene solution was washed with brine, dried and concentrated, followed by purification through silica gel chromatography to obtain 1.2 g of 4-(2-(4-(4-trifluoromethoxyphenyl)-3-cyclohexenyl)ethyl)-1-n-propyl-1-phenyl-1-silacyclohexane.

1.2 g of the product was dissolved in 30 ml of ethyl acetate and hydrogenated in the presence of 80 mg of a palladium-carbon catalyst at a pressure of 1 MPa of hydrogen. After theoretical consumption of hydrogen, the catalyst was removed by filtration. The resultant filtrate was concentrated to obtain 1.2 g of 4-(2-(4-(4-trifluoromethoxyphenyl)cyclohexyl)ethyl)-1-n-propyl-1-phenyl-1-silacyclohexane.

3 ml of a carbon tetrachloride solution of 1.0 mol of iodine monochloride was added to 1.2 g of the product at room temperature. After agitation for 30 minutes, the mixture was concentrated. The resultant residue was dissolved in 10 ml of tetrahydrofuran, followed by dropping in a mixture of 200 mg of lithium aluminum hydride and 25 ml of tetrahydrofuran at 0°C. The reaction mixture was agitated for 1 hour, poured into dilute hydrochloric acid, and extracted with methylene chloride. The methylene chloride solution was washed with brine, dried and concentrated, followed by purification through silica gel chromatography to obtain 350 mg of the intended product. The results of measurement of phase temperatures and also of IR analysis are shown below.
Crystal phase-nematic phase transition temperature: 31.5°C
Nematic phase-isotropic phase transition temperature: 84.9°C
IR (liquid film) ν ₘₐₓ: 2922, 2850, 2100, 1510, 1261, 1223, 1167, 887, 843 cm⁻¹

### Example 16

### Preparation of trans, trans-4-(2-(4-(4-trifluoromethoxyphenyl)cyclohexyl)ethyl)-1-n-pentyl-1-silacyclohexane

The general procedure of Example 15 was repeated using 4-(2-(4-n-pentyl-4-phenyl-4-silacyclohexyl)ethyl)cyclohexanone in place of 4-(2-(4-n-propyl-4-phenyl-4-silacyclohexyl)ethyl)cyclohexanone of Example 15, thereby obtaining trans, trans-4-(2-(4-(4-trifluoromethoxyphenyl)cyclohexyl)ethyl)-1-n-pentyl-1-silacyclohexane. The results of measurement of phase transition temperatures and IR analysis are shown below.
Crystal phase-nematic phase transition temperature: 37.7°C
Nematic phase-isotropic phase transition temperature: 87.6°C
IR (liquid film) ν ₘₐₓ: 2916, 2850, 2094, 1510, 1267, 1225, 1159, 889, 835, 833 cm⁻¹

### Example 17

### Preparation of trans, trans-4-(2-(4-(3,5-difluoro-4-difluoromethoxyphenyl)cyclohexyl)ethyl)-1-n-pentyl-1-silacyclohexane

1.0 g of 4-(2-(4-n-pentyl-4-phenyl-4-silacyclohexyl)ethyl)cyclohexanone was dropped in 3.5 ml of a tetrahydrofuran solution of 1.0 mol of 4-(t-butyldimethylsiloxy)-3,5-difluorophenylmagnesium bromide at room temperature. After reaction at room temperature for 2 hours, the resultant mixture was poured into an ammonium chloride aqueous solution and extracted with benzene. 80 mg of p-toluenesulfonic acid monohydrate was added to the benzene solution, followed by removal of generated water under reflux. When the generation of water was stopped, the benzene solution was washed with brine, dried and concentrated, followed by purification through silica gel chromatography to obtain 1.5 g of 4-(2-(4-(4-(t-butyldimethylsiloxy)-3, 5-difluorophenyl)cyclohexenyl)ethyl)-1-n-pentyl-1-phenyl-1-silacyclohexane.

1.2 g of the product was dissolved in 30 ml of ethyl acetate, followed by hydrogenation at a pressure of 1 MPa in the presence of 80 mg of palladium-carbon catalyst. After theoretical consumption of hydrogen, the catalyst was removed by filtration, and the resultant filtrate was concentrated to obtain 1.5 g of 4-(2-(4-(4-(t-butyldimethylsiloxy)-3,5-difluorophenyl)cyclohexyl)ethyl)-1-n-pentyl-1-phenyl-1-silacyclohexane.

1.5 g of the product was dissolved in 5 ml of tetrahydrofuran, to which 3.5 ml of a tetrahydrofuran solution of 1 mol of tetrabutylammonium fluoride was added, followed by reaction at room temperature for 2 hours. After completion of the reaction, the mixture was poured into dilute hydrochloric acid and extracted with methylene chloride. The methylene chloride solution was washed with brine, dried and concentrated, followed by purification through silica gel chromatography to obtain 1,1 g of 4-(2-(4-(4-hydroxy-3,5-difluorophenyl)cyclohexyl)ethyl)-1-n-pentyl-1-phenyl-1-silacyclohexane.

1.1 g of the product, 1 g of difluorochloromethane, 1 g of 33% NaOH solution, 0.3 g of tetrabutyl hydrogensulfate and 10 ml of tetrahydrofuran were charged into a 100 ml autoclave and reacted at room temperature for 4 hours. After completion of the reaction, the reaction mixture was poured into dilute hydrochloric acid and extracted with methylene chloride. The methylene chloride solution was washed with brine, dried and concentrated to obtain 1.1 g of 4-(2-(4-(4-difluoromethoxy-3,5-difluorophenyl)cyclohexyl)ethyl)-1-n-pentyl-1-phenyl-1-silacyclohexane.

3 ml of a carbon tetrachloride solution of 1.0 mol of iodine monochloride was added to 1.0 g of the thus obtained product at room temperature, agitated for 30 minutes and concentrated. The resultant residue was dissolved in 10 ml of tetrahydrofuran and dropped in a mixture of 200 mg of lithium aluminium hydride and 25 ml of tetrahydrofuran at 0°C. The reaction mixture was agitated for 1 hour, poured into dilute hydrochloric acid and extracted with methylene chloride. The methylene chloride solution was washed with brine, dried and concentrated, followed by purification through silica gel chromatography to obtain 320 mg of the intended product.

### Example 18

### Preparation of trans, trans-4-(2-(4-(4-(3,4-difluorophenyl)phenyl)cyclohexyl)ethyl)-1-n-pentyl-1-silacyclohexyl

In the same manner as in Example 7, 4-(3,4-difluorophenyl)phenylmagnesium bromide was reacted with 5.20 g of 4-(2-(4-n-pentyl-4-phenyl-4-silacyclohexyl)ethyl)cyclohexanone. The resultant alcohol was catalytically reduced to obtain 4-(2-(4-(4-(3,4-difluorophenyl)phenyl)cyclohexyl)ethyl)- 1-n-pentyl-1-phenyl-1-silacyclohexane, followed by further reaction with iodine monochloride and then reduction with lithium aluiminium hydride to obtain 808 mg (yield: 12%) of the intended product.

### Example 19

### Preparation of trans, trans-4-(2-(4-(4-(4-trifluoromethoxyphenyl)phenyl)cyclohexyl)ethyl)-1-n-pentyl-1-silacyclohexane

The general procedure of Example 7 was repeated using a tetrahydrofuran solution of 4-(4-trifluoromethoxyphenyl)phenylmagnesium bromide in place of the tetrahydrofuran solution of 1.0 mol of 3,4,5-trifluorophenylmagnesium bromide, thereby obtaining trans, trans-4-(2-(4-(4-(4-trifluoromethoxyphenyl)phenyl)cyclohexyl)ethyl)-1-n-pentyl-1-silacyclohexane.

### Example 20

### Preparation of trans, trans-4-(2-(4-(4-(4-fluorophenyl)phenyl)cyclohexyl)ethyl)-1-n-pentyl-1-silacyclohexane

The general procedure of Example 7 was repeated using a tetrahydrofuran solution of 4-(4-fluorophenyl)phenylmagnesium bromide in place of the tetrahydrofuran solution of 1.0 mol of 3,4,5-trifluorophenylmagnesium bromide, thereby obtaining trans, trans-4-(2-(4-(4-(4-fluorophenyl)phenyl)cyclohexyl)ethyl)-1-n-pentyl-1-silacyclohexane.

### Example 21

### Preparation of trans, trans-4-(2-(4-(4-(3,4-difluorophenyl)phenyl)cyclohexyl)ethyl)-1-n-pentyl-1-silacyclohexane

5 ml of a tetrahydrofuran solution of 1.0 mol of 3,4-difluorophenylmagnesium bromide was dropped, at room temperature, in a mixture of 270 mg of trans, trans-4-(2-(4-(4-chlorophenyl)cyclohexyl)ethyl)-1-n-pentyl-1-silacyclohexane obtained in Example 8, 30 mg of 1,3-bis(diphenylphosphino)propane nickel (II) chloride and 20 ml of ether. After agitation at room temperature for 20 hours, the reaction mixture was poured into an ammonium chloride aqueous solution and extracted with methylene chloride. The methylene chloride solution was washed with brine, dried and concentrated, followed by purification through silica gel chromatography to obtain 128 mg (yield: 47%) of the intended product. The physical values of the product were completely coincident with those of Example 18.

### Example 22

### Preparation of trans, trans-4-(2-(4-(4-(3,4,5-trifluorophenyl)phenyl)cyclohexyl)ethyl)-1-n-pentyl-1-silacyclohexane

The general procedure of Example 21 was repeated using a tetrahydrofuran solution of 3,4,5-trifluoromethylphenylmagnesium bromide in place of the tetrahydrofuran solution of 1.0 mol of 3,4-difluorophenylmagnesium bromide, thereby obtaining trans, trans-4-(2-(4-(4-(3,4,5-trifluorophenyl)phenyl)cyclohexyl)ethyl)-1-n-pentyl-1-silacyclohexane

### Example 23

### Preparation of trans, trans-4-(2-(4-(4-(4-trifluoromethylphenyl)phenyl)cyclohexyl)ethyl)-1-n-pentyl-1-silacyclohexane

The general procedure of Example 21 was repeated using a tetrahydrofuran solution of 4-trifluoromethylphenylmagnesium bromide in place of the tetrahydrofuran solution of 1.0 mol of 3,4-difluorophenylmagnesium bromide of Example 21, thereby obtaining trans, trans-4-(2-(4-(4-(4-trifluoromethylphenyl)phenyl)cyclohexyl)ethyl)-1-n-pentyl-1-silacyclohexane.

As will be apparent from the foregoing examples, the cyclohexanone compounds of the invention are intermediates which are useful for preparing silacyclohexane compounds serving as a liquid crystal. In fact, various types of silacyclohexane-based liquid crystal compounds can be derived from the cyclohexanone compounds.

## Claims

1. A compound of formula (I) 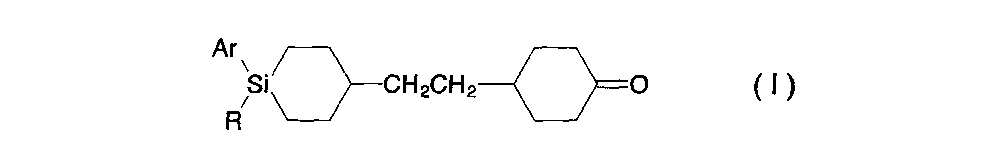 wherein Ar is a phenyl group or a tolyl group, and R is a phenyl group, a tolyl group, a linear C₁-C₁₀ alkyl group, a mono- or difluoro-C₁-C₁₀-alkyl group, a branched C₃-C₈ alkyl group or a C₂-C₇ alkoxyalkyl group.

2. A process for preparing a compound as defined in claim 1, which process comprises
(a) subjecting, to a Michael addition reaction, methyl vinyl ketone and an enamine compound of formula (1) 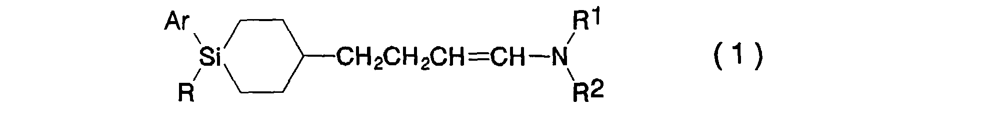 wherein each of Ar and R is as defined in claim 1, and R¹ and R², which may be the same or different, each represents a C₁-C₄ alkyl group, or R¹ and R² together form -(CH₂)₄-, -(CH₂)₅- or -(CH₂)₂O(CH₂)₂- so as to complete a cyclic ring with the nitrogen atom to which they are linked;
(b) subjecting the resulting Michael adduct of formula (2) 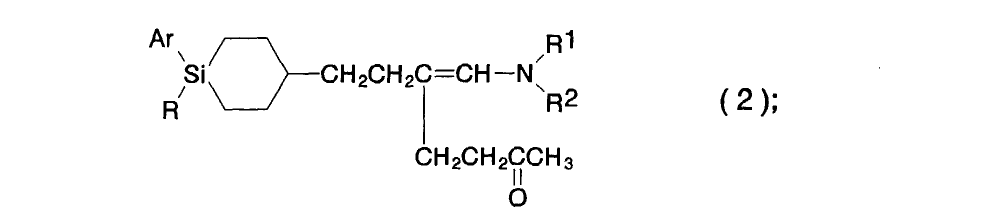 wherein Ar, R, R₁ and R₂ are as defined above, to an intramolecular aldol condensation or hydrolysis;
(c) subjecting the resulting ketoaldehyde compound of formula (3) 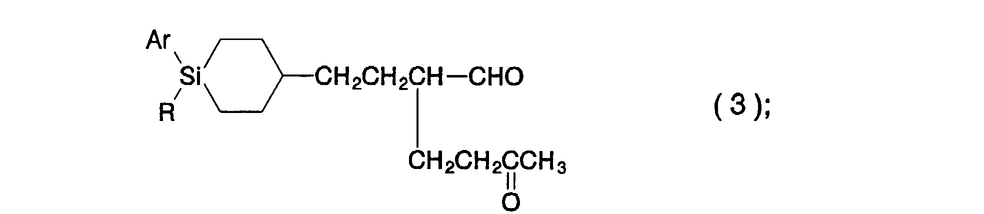 wherein Ar and R are as defined above; to an intramolecular aldol condensation; and
(d) hydrogenating the resulting cyclohexene compound of formula (4) 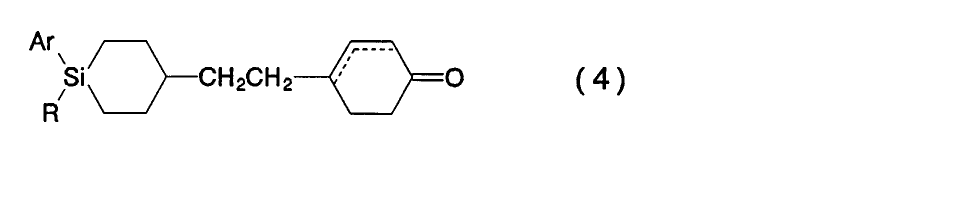 wherein 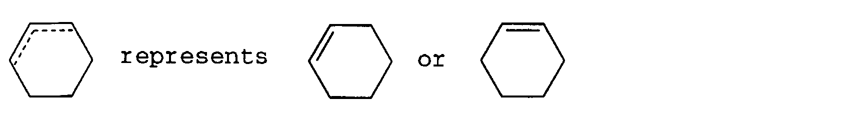 and Ar and R are as defined above.

3. A process according to claim 2, wherein the Michael addition reaction step (a) is carried out in a solvent at a temperature of from 0 to 150°C with an equivalent ratio of methyl vinyl ketone to enamine compound of 1:1 to 5:1.

4. A process according to claim 2 or 3 wherein, in step (d), the cyclohexenone of formula (4) is hydrogenated at a temperature of from 0 to 150°C at a pressure from atmospheric pressure to 20 kg/cm² of hydrogen.

5. A process for preparing a compound of formula (II) 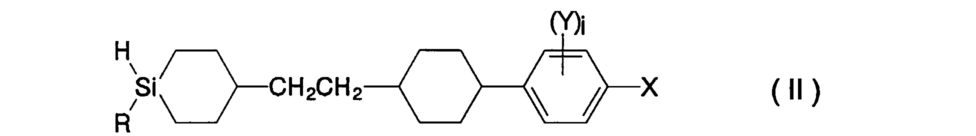 wherein R is as defined in claim 1, X is CN, F, Cl, Br, CF₃, OCF₃, OCHF₂, OCHFCl, OCF₂Cl, R or OR wherein R is as defined in claim 1, (O)ₘCY₁=CX₁X₂ wherein m is 0 or 1, Y₁ and X₁, which may be the same or different, are each H, F, or Cl, and X₂ is F or Cl, or O(CH₂)ᵣ(CF₂)_{S}X₃ wherein r and s, which may be the same or different, are each 0, 1 or 2 provided that r + s = 2, 3 or 4, and X₃ is H, F or Cl, Y is a halogen or CH₃, and i is 0, 1 or 2, which process comprises:
(a) reacting a compound of formula (I), as defined in claim 1, with an organometallic compound of formula (5) 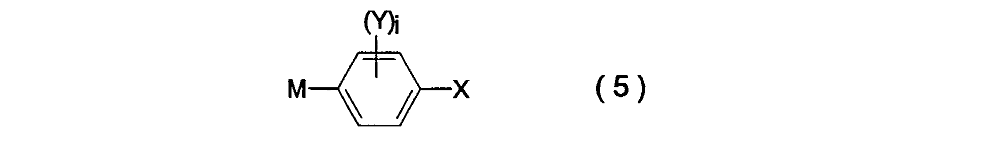 wherein M is Li, MgU, ZnU or TiUₖ(OW)₃₋ₖ wherein U is a halogen, W is an alkyl group and k is zero or an integer of 1 to 3, and X, Y and i are each as defined above for formula (II);
(b) subjecting the resulting compound of the formula (6) 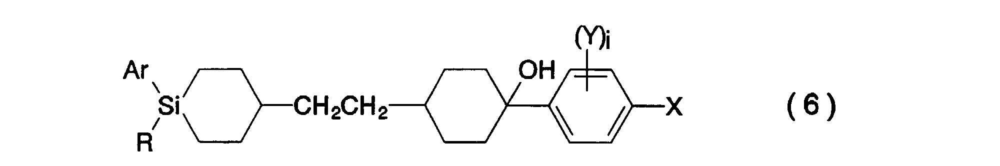 wherein Ar, R, X, Y and i are as defined above, to hydrogenolysis or dehydration and hydrogenation; and
(c) subjecting the resulting compound of formula (7) 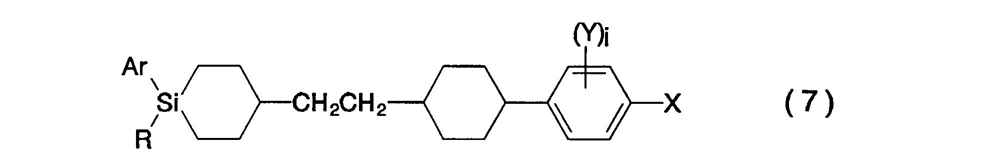 wherein Ar, R, Y, i and X are as defined above, to de-silylation and reduction.

6. A process for preparing a compound of formula (III) 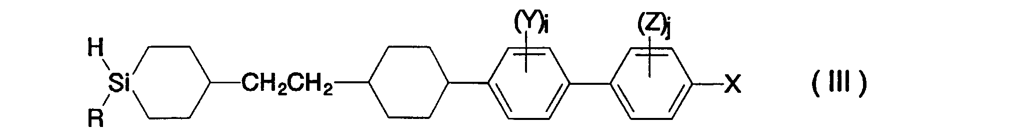 wherein R, Y, X and i are as defined in claim 5, Z is a halogen or CH₃, and i is 0, 1 or 2, which process comprises either
(a) reacting a compound of formula (I), as defined in claim 1, with an organometallic reagent of formula (8) 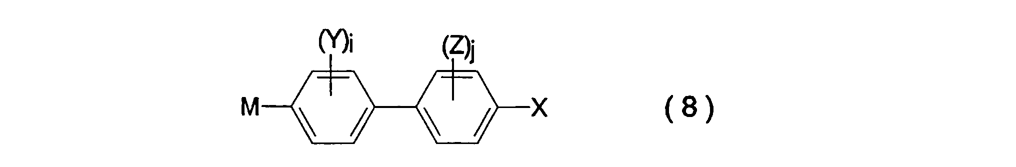 wherein M is Li, MgU, ZnU or TiUₖ(OW)₃₋ₖ wherein U is a halogen, W is an alkyl group, and k is zero or an integer of 1 to 3, X, i and j are each as defined above for formula (III);
(b) subjecting the resulting compound of formula (9) 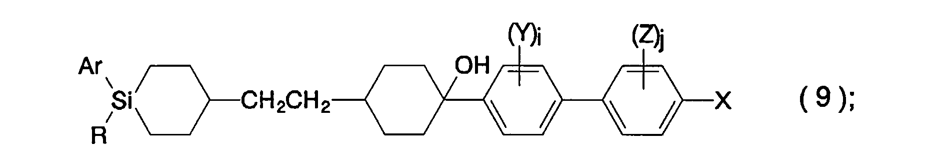 wherein Ar, R, Y, Z, X, i and j are as defined above, to hydrogenolysis or dehydration and hydrogenation; and
(c) subjecting the resulting compound of formula (10) 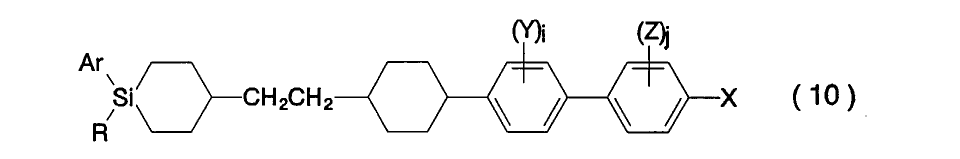 wherein Ar, R, Y, Z, X, i and j are as defined above, to de-silylation and reduction; or
(a') reacting a compound of formula (I) as defined in claim 1 with an organometallic reagent of formula (11) 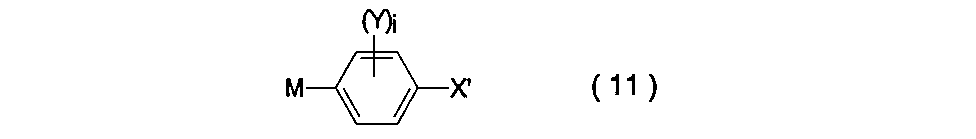 wherein M is Li, MgU, ZnU or TiUₖ(OW)₃₋ₖ wherein U is a halogen, W is an alkyl group, and k is zero or an integer of 1 to 3, and X' is a halogen;
(b') subjecting the resulting compound of formula (12) 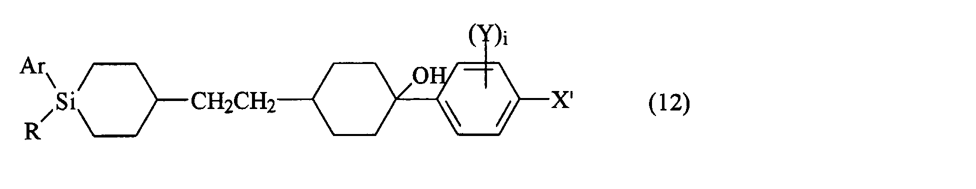 wherein Ar, R, Y, X' and i are as defined above to hydrogenolysis or dehydration and hydrogenation;
(c') reacting the resulting compound of formula (13): 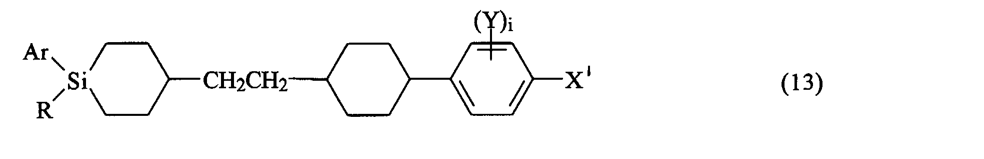 wherein Ar, R, Y, X' and i are as defined above with an organometallic reagent or formula (14) 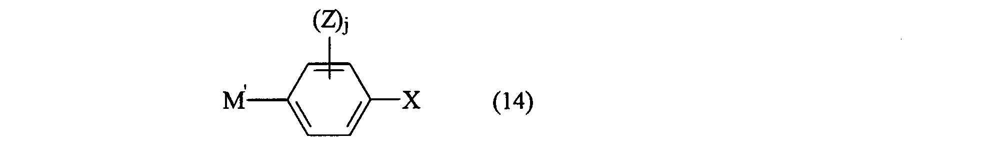 wherein M' is MgU', ZnU' in which U' is a halogen, or B(OV)₂ in which V is H or an alkyl group, Z is halogen or CH₃ and j is 0, 1 or 2; and
(d') subjecting the resulting compound of formula (15) 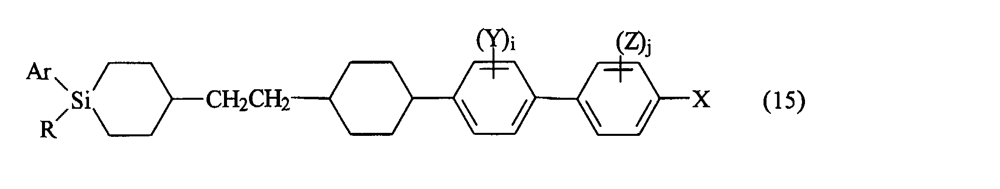 wherein Ar, R, X, Y, Z, i and j are as defined, to de-silylation and reduction.

7. A process according to claim 5 or 6, wherein the hydrogenolysis of step (b) or (b') is carried out at a temperature from 0 to 150°C at a pressure from atmospheric pressure to 20 kg/cm² of hydrogen in the presence of a hydrogenation catalyst.

8. A process according to claim 5 or 6, wherein the compound of formula (6), (9) or (12) is dehydrated with an acid and then hydrogenated at a temperature of from 0 to 150°C at a pressure from atmospheric pressure to 20 kg/cm² of hydrogen in the presence of a hydrogenation catalyst.

9. A process according to any one of claims 5 to 8 wherein the de-silylation of step (c) or (c') is performed using an electrophilic reagent.

10. A process according to any one of claims 5 to 8 wherein the de-silylation of step (c) or (c') is performed after addition of a Lewis acid or under irradiation of light.

## Patentansprüche

1. Verbindung der Formel (I) 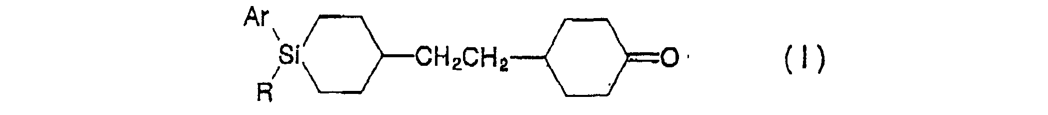 worin Ar eine Phenylgruppe oder eine Tolylgruppe ist und R eine Phenylgruppe, eine Tolylgruppe, eine lineare C₁-C₁₀-Alkylgruppe, eine.Mono- oder Difluor-C₁-C₁₀-alkylgruppe, eine verzweigte C₃-C₈-Alkylgruppe oder eine C₂-C₇-Alkoxyalkylgruppe ist.

2. Verfahren zur Herstellung einer Verbindung wie in Anspruch 1 definiert, wobei das Verfahren umfaßt
(a) Unterziehen einer Michael-Additionsreaktion Methylvinylketon und eine Enaminverbindung der Formel (1) 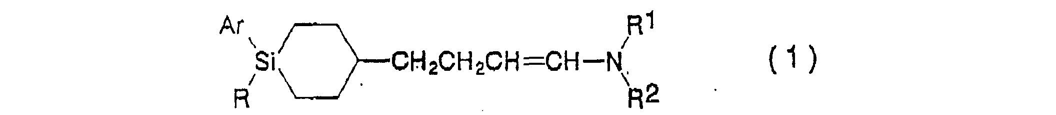 worin jedes Ar und R wie in Anspruch 1 definiert ist und R¹ und R², die gleich oder verschieden sein können, jeweils eine C₁-C₄-Alkylgruppe darstellen oder R¹ und R² zusammen -(CH₂)₄-, -(CH₂)₅- oder -(CH₂)₂O(CH₂)₂- unter Vervollständigung eines cyclischen Ringes mit dem Stickstoffatom, an welches sie gebunden sind, bilden;
(b) Unterziehen des resultierenden Michael-Adduktes der Formel (2) 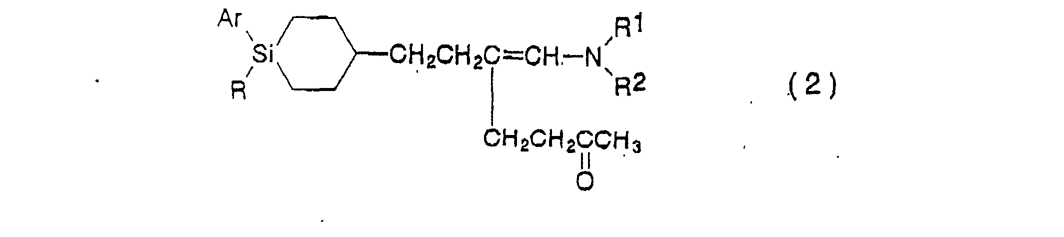 worin Ar, R, R¹ und R² wie zuvor definiert sind, einer intramolekularen Aldolkondensation oder Hydrolyse;
(c) Unterziehen der resultierenden Ketoaldehydverbindung der Formel (3) 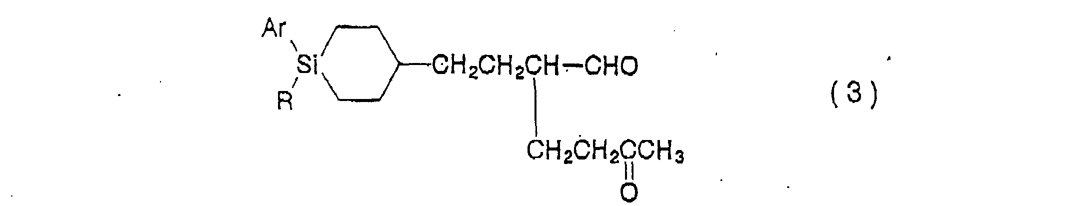 worin Ar und R wie zuvor definiert sind, einer intramolekularen Aldolkondensation; und
(d) Hydrieren der resultierenden Cyclohexenverbindung der Formel (4) 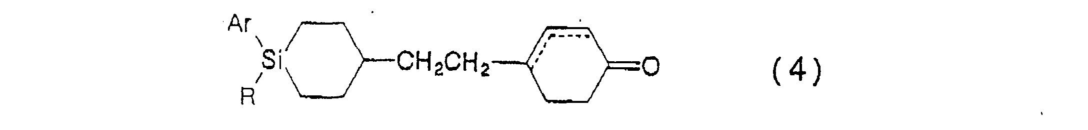 worin 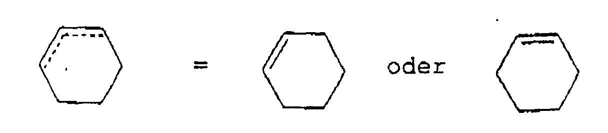 darstellt
und Ar und R wie zuvor definiert sind.

3. Verfahren nach Anspruch 2, bei welchem die Stufe (a) der Michael-Additionsreaktion in einem Lösungsmittel bei einer Temperatur von 0 bis 150°C mit einem Äquivalentverhältnis von Methylvinylketon zu Enaminverbindung von 1:1 bis 5:1 durchgeführt wird.

4. Verfahren nach Anspruch 2 oder 3, bei welchem in Stufe (d) das Cyclohexenon der Formel (4) bei einer Temperatur von 0 bis 150°C bei einem Druck von atmosphärischem Druck bis 20 kg/cm² Wasserstoff hydriert wird.

5. Verfahren zur Herstellung einer Verbindung der Formel (II) 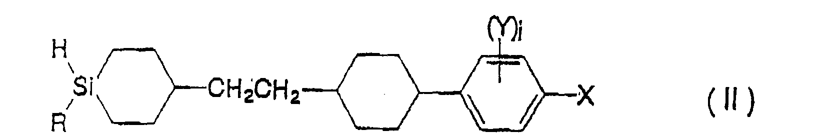 bei welchem R wie in Anspruch 1 definiert ist, X ist: CN, F, Cl, Br, CF₃, OCF₃, OCHF₂, OCHFCl, OCF₂Cl, R oder OR, worin R wie in Anspruch 1 definiert ist, (O)ₘ-CY₁=CX₁X₂, worin m = 0 oder 1 ist, jedes Y₁ und X₁, die gleich oder verschieden sein können, H, F oder Cl sind und X₂ ist: F oder Cl oder O(CH₂)ᵣ(CF₂)ₛX₃, worin jedes r und s, die gleich oder verschieden sein können, 0, 1 oder 2 sind, vorausgesetzt, daß r + s = 2, 3 oder 4 sind, und X₃ = H, F oder Cl ist, Y ein Halogen oder CH₃ ist und i = 0, 1 oder 2 ist, wobei das Verfahren umfaßt:
(a) Umsetzen einer Verbindung der Formel (I), wie in Anspruch 1 definiert, mit einer organometallischen Verbindung der Formel (5) 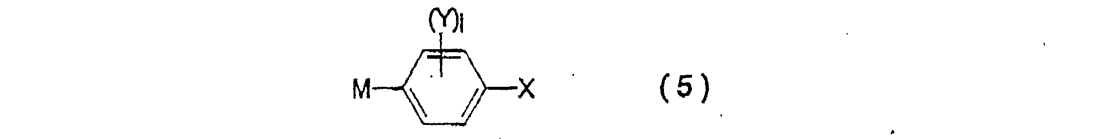 worin M = Li, MgU, ZnU oder TiUₖ(OW)₃₋ₖ ist, worin U ein Halogen ist, W eine Alkylgruppe ist und k = null oder eine ganze Zahl von 1 bis 3 ist, und X, Y und i wie zuvor für Formel (II) definiert sind;
(b) Unterziehen der resultierenden Verbindung der Formel (6) 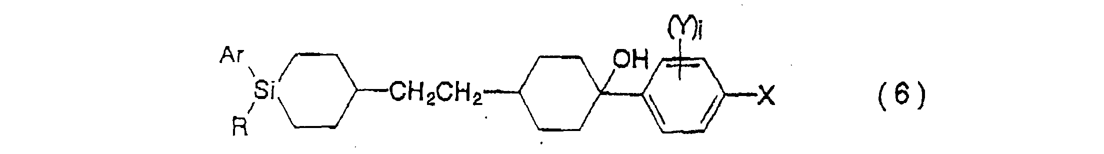 worin Ar, R, X, Y und i wie zuvor definiert sind, der Hydrogenolyse oder Dehydratation und Hydrierung; und
(c) Unterziehen der resultierenden Verbindung der Formel (7) 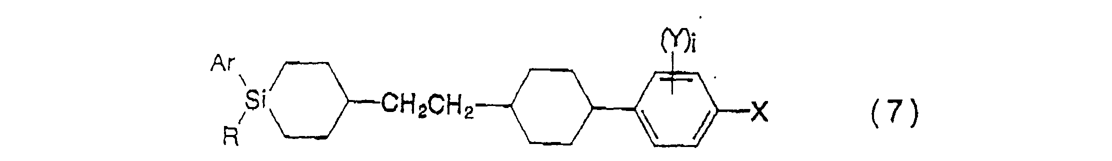 worin Ar, R, Y, i und X wie zuvor definiert sind, der Desilylierung und Reduktion.

6. Verfahren zur Herstellung einer Verbindung der Formel (III) 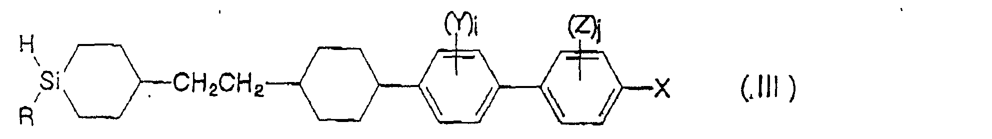 worin R, Y, X und i wie in Anspruch 5 definiert sind, Z ein Halogen oder CH₃ ist und i = 0, 1 oder 2 ist, wobei das Verfahren umfaßt:
entweder
(a) Umsetzen einer Verbindung der Formel (I), wie in Anspruch 1 definiert, mit einem organometallischen Reagens der Formel (8) 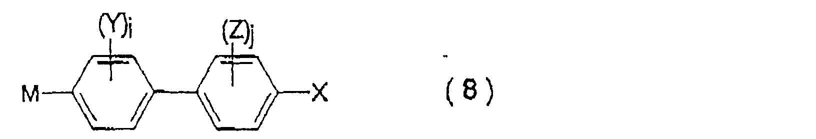 worin M = Li, MgU, ZnU oder TiUₖ(OW)₃₋ₖ ist, worin U ein Halogen ist, W eine Alkylgruppe ist und k = null oder eine ganze Zahl von 1 bis 3 ist, X, i und j wie zuvor für Formel (III) definiert sind;
(b) Unterziehen der resultierenden Verbindung der Formel (9) 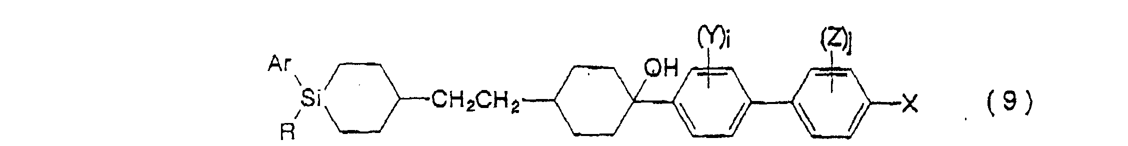 worin Ar, R, Y, Z, X, i und j wie zuvor definiert sind, der Hydrogenolyse oder Dehydratation und Hydrierung; und
(c) Unterziehen der resultierenden Verbindung der Formel (10) 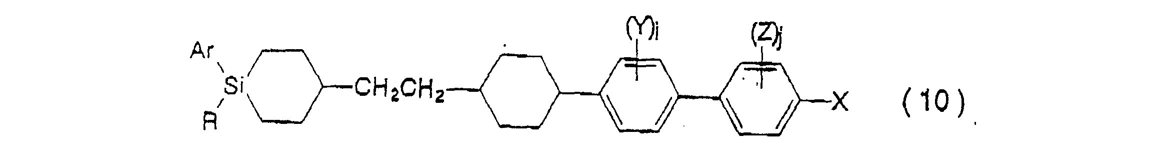 worin Ar, R, Y, Z, X, i und j wie zuvor definiert sind, der Desilylierung und Reduktion, oder
(a') Umsetzen einer Verbindung der Formel (I), wie in Anspruch 1 definiert, mit einem organometallischen Reagens der Formel (11) 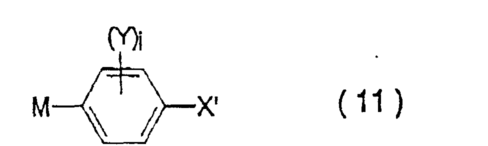 worin M = Li, MgU, ZnU oder TiUₖ(OW)₃₋ₖ ist, worin U ein Halogen ist, W eine Alkylgruppe ist und k = null oder eine ganze Zahl von 1 bis 3 ist und X' ein Halogen ist;
(b') Unterziehen der resultierenden Verbindung der Formel (12) 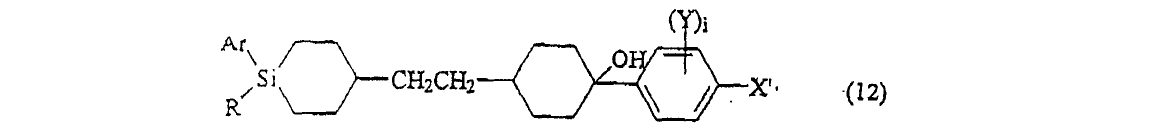 worin Ar, R, Y, X' und i wie zuvor definiert sind, der Hydrogenolyse oder Dehydratation und Hydrierung;
(c') Umsetzen der resultierenden Verbindung der Formel (13) 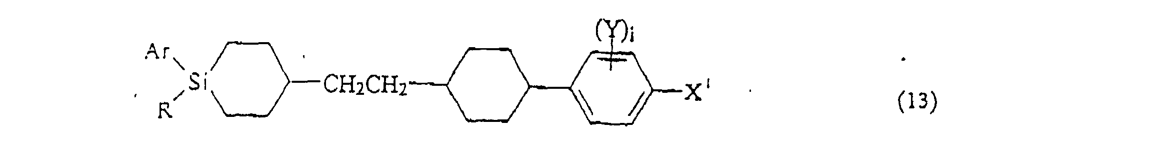 worin Ar, R, Y, X' und i wie zuvor definiert sind, mit einem organometallischen Reagens der Formel (14) 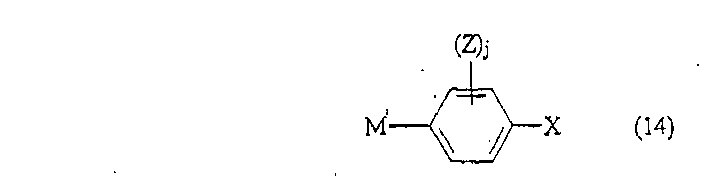 worin M' = MgU', ZnU', worin U' ein Halogen ist, oder B(OV)₂ ist, worin V = H oder eine Alkylgruppe ist, Z = Halogen oder CH₃ ist und j = 0, 1 oder 2 ist; und
(d') Unterziehen der resultierenden Verbindung der Formel (15) 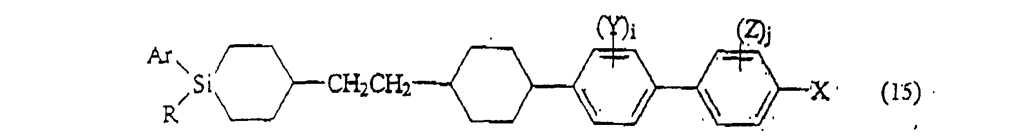 worin Ar, R, X, Y, Z, i und j wie definiert sind, der Desilylierung und Reduktion.

7. Verfahren nach Anspruch 5 oder 6, bei welchem die Hydrogenolyse von Stufe (b) oder (b') bei einer Temperatur von 0 bis 150°C bei einem Druck von atmosphärischem Druck bis 20 kg/cm² Wasserstoff in Anwesenheit eines Hydrierungskatalysators durchgeführt wird.

8. Verfahren nach Anspruch 5 oder 6, bei welchem die Verbindung der Formel (6), (9) oder (12) mit einer Säure dehydratisiert wird und dann bei einer Temperatur von 0 bis 150°C bei einem Druck von atmosphärischem Druck bis 20 kg/cm² Wasserstoff in Anwesenheit eines Hydrierungskatalysators. hydriert wird.

9. Verfahren nach einem der Ansprüche 5 bis 8, bei welchem die Desilylierung in Stufe (c) oder (c') unter Verwendung eines elektrophilen Reagens durchgeführt wird.

10. Verfahren nach einem der Ansprüche 5 bis 8, bei welchem die Desilylierung in Stufe (c) oder (c') nach Zugabe einer Lewissäure oder unter Bestrahlung mit Licht durchgeführt wird.

## Revendications

1. Composé de formule (I) : 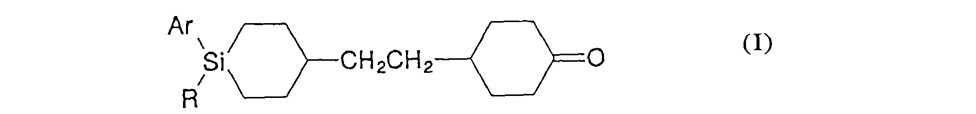 dans laquelle Ar représente un groupe phényle ou tolyle, et R représente un groupe phényle ou tolyle, un groupe alkyle linéaire en C₁₋₁₀, un groupe monofluoroalkyle ou difluoroalkyle en C₁₋₁₀, un groupe alkyle ramifié en C₃₋₈ ou un groupe alcoxyalkyle en C₂₋₇.

2. Procédé de préparation d'un composé conforme à la revendication 1, lequel procédé comporte
a) le fait d'effectuer une réaction d'addition de Michael entre de la méthyl-vinyl-cétone et une énamine de formule (1) : 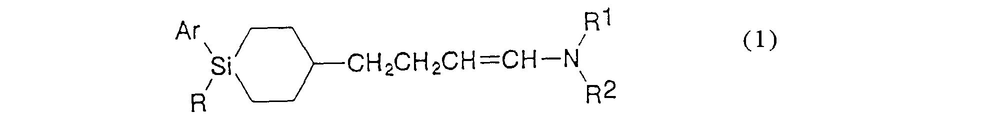 dans laquelle les symboles Ar et R ont les significations respectives indiquées dans la revendication 1, et R¹ et R² représentent chacun un groupe alkyle en C₁₋₄, qui peut être le même ou non, ou R¹ et R² représentent ensemble un groupe -(CH₂)₄-, -(CH₂)₅- ou -(CH₂)₂O(CH₂)₂-, de manière à former un cycle avec l'atome d'azote auquel ils sont liés ;
b) le fait de faire subir au produit d'addition de Michael ainsi obtenu, de formule (2) : 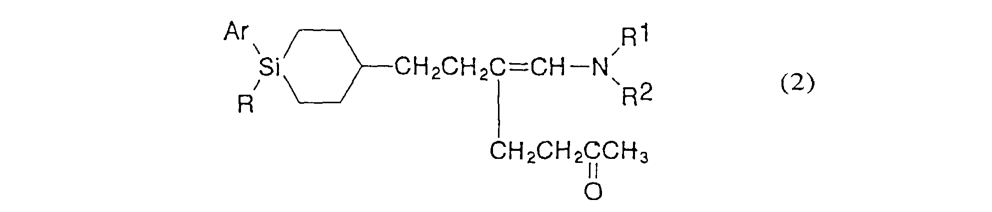 dans laquelle Ar, R, R¹ et R² ont les significations indiquées ci-dessus, soit une condensation aldolique intramoléculaire, soit une hydrolyse, et dans ce dernier cas,
c) le fait de faire subir au cétoaldéhyde résultant, de formule (3) : 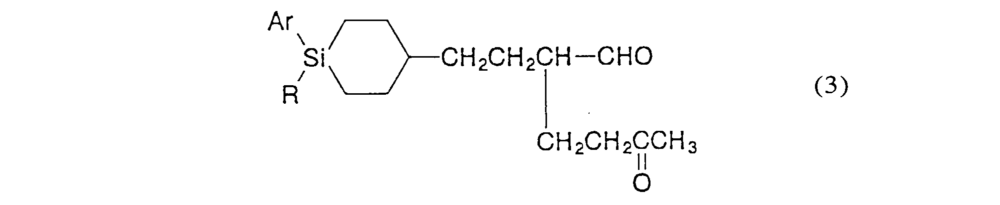 dans laquelle Ar et R ont les significations indiquées ci-dessus, une condensation aldolique intramoléculaire ; et
d) le fait d'hydrogéner la cyclohexénone résultante, de formule (4) : 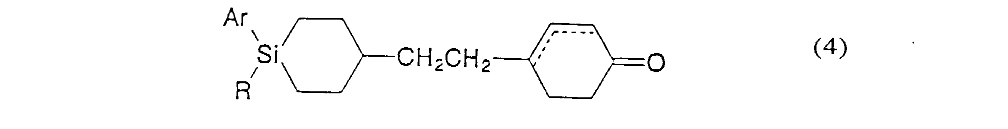 dans laquelle 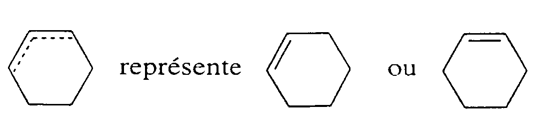 et Ar etR ont les significations indiquées plus haut.

3. Procédé conforme à la revendication 2, dans lequel on effectue la réaction d'addition de Michael de l'étape (a) dans un solvant et à une température de 0 à 150°C, le rapport d'équivalents de la méthyl-vinyl-cétone à l'énamine valant de 1/1 à 5/1.

4. Procédé conforme à la revendication 2 ou 3, dans lequel, dans l'étape (d), on effectue l'hydrogénation de la cyclohexénone de formule (4) à une température de 0 à 150 °C et sous une pression d'hydrogène valant de la pression atmosphérique à 20 kg/cm².

5. Procédé de préparation d'un composé de formule (II) : 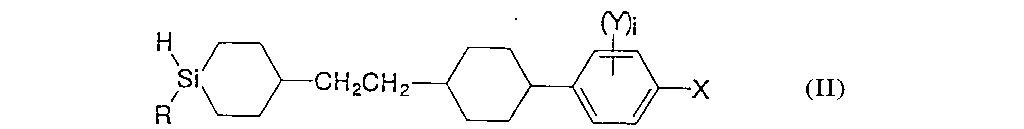 dans laquelle
R a la signification indiquée dans la revendication 1,
X représente un atome F, Cl ou Br, ou un groupe CN, CF₃, OCF₃, OCHF₂, OCHFCl ou OCF₂Cl, ou bien R ou OR où R à la signification indiquée dans la revendication 1, ou encore (O)ₘCY₁=CX₁X₂ où m vaut 0 ou 1, Y₁ et X₁, qui peuvent avoir des significations identiques ou différentes, représentent chacun un atome H, F ou Cl et X₂ représente un atome F ou Cl, ou enfin O(CH₂)ᵣ(CF₂)ₛX₃ où r et s, qui peuvent prendre des valeurs identiques ou différentes, valent chacun 0, 1 ou 2, pourvu que la somme (r + s) vaille 2, 3 ou 4, et X₃ représente un atome H, F ou Cl,
Y représente un atome d'halogène ou un groupe CH₃, et
i vaut 0, 1 ou 2 ,
lequel procédé comporte :
a) le fait de faire réagir un composé de formule (I), défini dans la revendication 1, avec un composé organométallique de formule (5) : 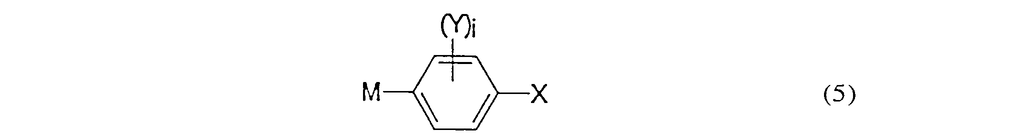 dans laquelle M représente Li, MgU, ZnU ou TiUₖ(OW)₃₋ₖ où U représente un atome d'halogène, W représente un groupe alkyle et k vaut 0 ou un nombre entier de 1 à 3, et X, Y et i ont chacun les significations indiquées ci-dessus à propos de la formule (II) ;
b) le fait de faire subir au composé résultant, de formule (6) : 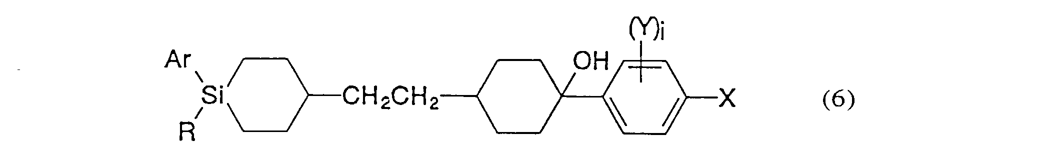 dans laquelle Ar, R, X, Y et i ont les significations indiquées plus haut, soit une hydrogénolyse, soit une déshydratation suivie d'une hydrogénation ; et
c) le fait de faire subir au composé résultant, de formule (7) : 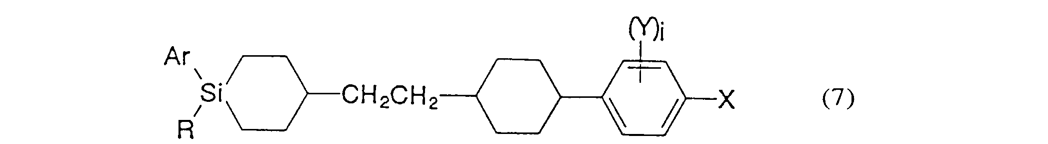 dans laquelle Ar, R, X, Y et i ont les significations indiquées plus haut, une réaction de désilylation et une réduction.

6. Procédé de préparation d'un composé de formule (III) : 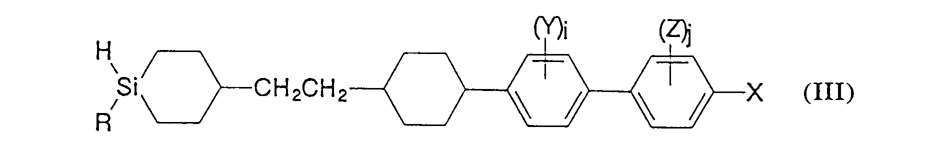 dans laquelle R, X, Y et i ont les significations indiquées dans la revendication 5, Z représente un atome d'halogène ou un groupe CH₃ et j vaut 0, 1 ou 2,
lequel procédé comporte soit
a) le fait de faire réagir un composé de formule (I), défini dans la revendication 1, avec un composé organométallique de formule (8) : 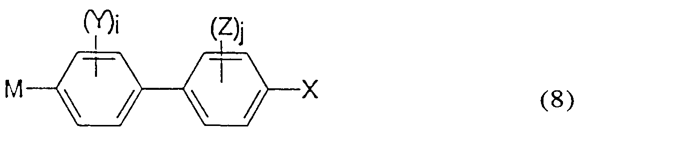 dans laquelle M représente Li, MgU, ZnU ou TiUₖ(OW)₃₋ₖ où U représente un atome d'halogène, W représente un groupe alkyle et k vaut 0 ou un nombre entier de 1 à 3, et X, Y, Z, i et j ont chacun les significations indiquées ci-dessus à propos de la formule (III) ;
b) le fait de faire subir au composé résultant, de formule (9) : 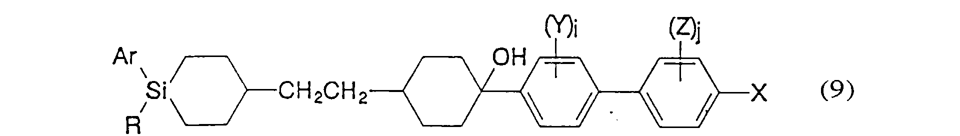 dans laquelle Ar, R, X, Y, Z, i et j ont les significations indiquées plus haut, soit une hydrogénolyse, soit une déshydratation suivie d'une hydrogénation ; et
c) le fait de faire subir au composé résultant, de formule (10) : 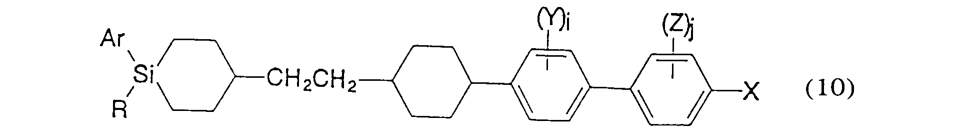 dans laquelle Ar, R, X, Y, Z, i et j ont les significations indiquées plus haut, une réaction de désilylation et une réduction ;
soit
a') le fait de faire réagir un composé de formule (I), défini dans la revendication 1, avec un composé organométallique de formule (11): 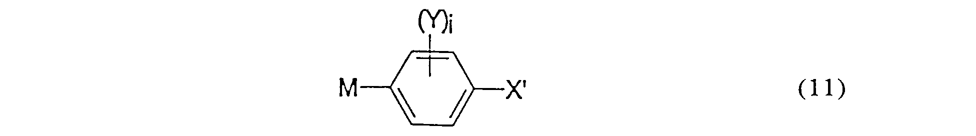 dans laquelle M représente Li, MgU, ZnU ou TiUₖ(OW)₃₋ₖ où U représente un atome d'halogène, W représente un groupe alkyle et k vaut 0 ou un nombre entier de 1 à 3, et X' représente un atome d'halogène ;
b') le fait de faire subir au composé résultant, de formule (12) : 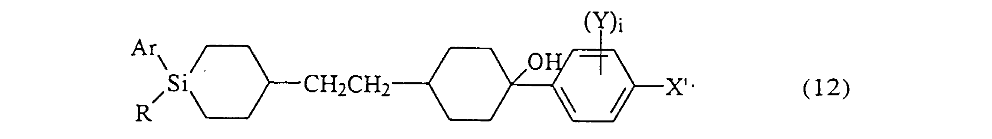 dans laquelle Ar, R, X', Y et i ont les significations indiquées plus haut, soit une hydrogénolyse, soit une déshydratation suivie d'une hydrogénation ;
c') le fait de faire réagir le composé résultant, de formule (13) : 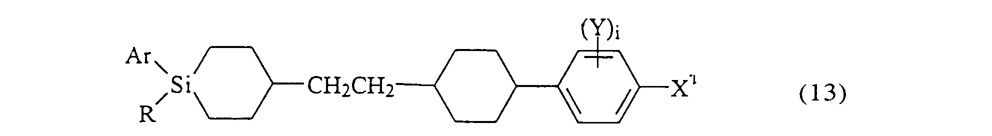 dans laquelle Ar, R, X', Y et i ont les significations indiquées plus haut, avec un composé organométallique de formule (14) : 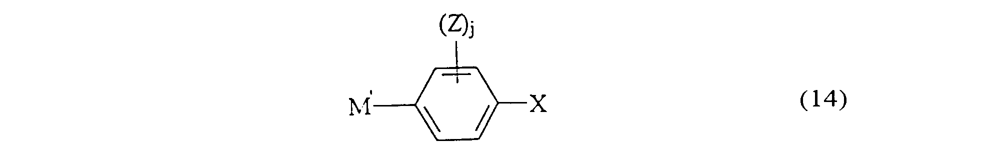 dans laquelle M' représente MgU' ou ZnU', où U' représente un atome d'halogène, ou B(OV)₂ où V représente un atome d'hydrogène ou un groupe alkyle, Z représente un atome d'halogène ou un groupe CH₃ et j vaut 0, 1 ou 2 ; et
d') le fait de faire subir au composé résultant, de formule (15) : 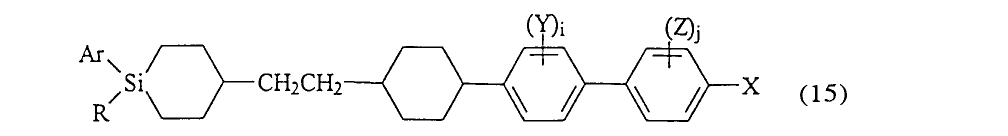 dans laquelle Ar, R, X, Y, Z, i et j ont les significations indiquées plus haut, une réaction de désilylation et une réduction.

7. Procédé conforme à la revendication 5 ou 6, dans lequel on effectue l'hydrogénolyse de l'étape (b) ou (b') à une température de 0 à 150 °C, sous une pression d'hydrogène valant de la pression atmosphérique à 20 kg/cm², et en présence d'un catalyseur d'hydrogénation.

8. Procédé conforme à la revendication 5 ou 6, dans lequel le composé de formule (6), (9) ou (12) est déshydraté à l'aide d'un acide, puis hydrogéné à une température de 0 à 150 °C, sous une pression d'hydrogène valant de la pression atmosphérique à 20 kg/cm², et en présence d'un catalyseur d'hydrogénation.

9. Procédé conforme à l'une des revendications 5 à 8, dans lequel la réaction de désilylation de l'étape (c) ou (c') est effectuée au moyen d'un réactif électrophile.

10. Procédé conforme à l'une des revendications 5 à 8, dans lequel la réaction de désilylation de l'étape (c) ou (c') est effectuée après addition d'un acide de Lewis ou sous exposition à l'action d'un rayonnement lumineux.
